(19) **Europäisches Patentamt**
**European Patent Office**
**Office européen des brevets**

(11) **EP 4 564 952 A1**

(12) **EUROPEAN PATENT APPLICATION**
published in accordance with Art. 153(4) EPC

(43) Date of publication:
04.06.2025 Bulletin 2025/23

(21) Application number: 22952286.7

(22) Date of filing: 27.07.2022

(51) International Patent Classification (IPC):
*H04W 72/04* (2023.01)

(52) Cooperative Patent Classification (CPC):
H04W 72/04

(86) International application number:
PCT/CN2022/108119

(87) International publication number:
WO 2024/020822 (01.02.2024 Gazette 2024/05)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Beijing Xiaomi Mobile Software Co.,
Ltd.
Beijing 100085 (CN)

(72) Inventor: GAO, Xueyuan
Beijing 100085 (CN)

(74) Representative: Dehns Germany Partnerschaft
mbB
Theresienstraße 6-8
80333 München (DE)

(54) **UPLINK POWER CONTROL METHOD AND APPARATUS, DEVICE, AND STORAGE MEDIUM**

(57) The present application relates to the field of wireless communications. Disclosed are an uplink power control method and apparatus, a device, and a storage medium. The method is applied to a terminal device. The method comprises: receiving maximum-transmission-power configuration information, which is sent by means of an access network device, wherein the maximum-transmission-power configuration information is used for determining, when simultaneous transmission via multi-panel (STxMP) is scheduled on the basis of multi-downlink control information (DCI), panel maximum transmission powers PCMAX,P used when a terminal device respectively performs uplink transmission via two panels, wherein the terminal device comprises multiple panels, and the terminal device supports simultaneous transmission via multi-panel. The method can realize power control for panels when STxMP is scheduled on the basis of multi-DCI.

Receiving configuration information of a maximum transmitting power sent by an access network device, the configuration information of the maximum transmitting power being configured to determine respective panel maximum transmitting powers $P_{CMAX,P}$ corresponding to uplink transmissions respectively performed by the terminal device via two antenna panels in a case of scheduling STxMP by multi-DCI

210

FIG. 4

**Description**

**TECHNICAL FIELD**

The present disclosure relates to the field of wireless communication, and in particular, to an uplink power control method, device, apparatus and storage medium.

**BACKGROUND**

In 3GPP (3rd Generation Partnership Project) R18 (Release 18) uplink (Multiple Input Multiple Output) enhancement, it considers realizing, via a plurality of panels (antenna panels) of a terminal device, simultaneous uplink transmissions towards a plurality of TRPs (transmit/receive point), so as to further improve transmission reliability and throughput rate and of uplink transmission.

In the related art, a terminal device determines a transmitting power for the uplink transmission based on a maximum transmitting power configured by the network side.

When scheduling simultaneous transmission via multi-panel based on M-DCI (multi-downlink control information), how to control uplink power is an urgent problem to be solved.

**SUMMARY**

Embodiments of the present disclosure provide an uplink power control method, device, apparatus, and storage medium, which can achieve the power control of respective panels when scheduling simultaneous transmission via multi-panel based on M-DCI. The described technical solutions are as follows.

An aspect of the present disclosure provides an uplink power control method, performed by a terminal device, including:

receiving configuration information of a maximum transmitting power sent by an access network device, the configuration information of the maximum transmitting power being configured to determine respective panel maximum transmitting powers $P_{CMAX,P}$ corresponding to uplink transmissions respectively performed by the terminal device via two antenna panels in a case of scheduling simultaneous transmission via multi-panel (STxMP) by multi-downlink control information (M-DCI),
wherein the terminal device includes a plurality of antenna panels and supports simultaneous uplink transmissions via the plurality of antenna panels.

An aspect of the present disclosure provides an uplink power control method, performed by an access network device, including:

sending configuration information of a maximum transmitting power to a terminal device, the configuration information of the maximum transmitting power being configured to determine respective panel maximum transmitting powers $P_{CMAX,P}$ corresponding to uplink transmissions respectively performed by the terminal device via two antenna panels in a case of scheduling simultaneous transmission via multi-panel (STxMP) by multi-downlink control information (M-DCI),
wherein the terminal device includes a plurality of antenna panels and supports simultaneous uplink transmissions via the plurality of antenna panels.

An aspect of the present disclosure provides an uplink power control device, including:

a receiving module, configured to receive configuration information of a maximum transmitting power sent by an access network device, the configuration information of the maximum transmitting power being configured to determine respective panel maximum transmitting powers $P_{CMAX,P}$ corresponding to uplink transmissions respectively performed by the terminal device via two antenna panels in a case of scheduling simultaneous transmission via multi-panel (STxMP) by multi-downlink control information (M-DCI),
wherein the terminal device includes a plurality of antenna panels and supports simultaneous uplink transmissions via the plurality of antenna panels.

An aspect of the present disclosure provides an uplink power control device, includes:

a sending module, configured to send configuration information of a maximum transmitting power to a terminal device, the configuration information of the maximum transmitting power being configured to determine respective panel maximum transmitting powers $P_{CMAX,P}$ corresponding to uplink transmissions respectively performed by the terminal device via two antenna panels in a case of scheduling simultaneous transmission via multi-panel (STxMP) by multi-downlink control information (M-DCI),

wherein the terminal device includes a plurality of antenna panels and supports simultaneous uplink transmissions via the plurality of antenna panels.

An aspect of the present disclosure provides a terminal device, including a processor and a transceiver connected to the processor,

wherein the transceiver is configured to receive configuration information of a maximum transmitting power sent by an access network device, the configuration information of the maximum transmitting power being configured to determine respective panel maximum transmitting powers $P_{CMAX,P}$ corresponding to uplink transmissions respectively performed by the terminal device via two antenna panels in a case of scheduling simultaneous transmission via multi-panel (STxMP) by multi-downlink control information (M-DCI),
wherein the terminal device includes a plurality of antenna panels and supports simultaneous uplink transmissions via the plurality of antenna panels.

An aspect of the present disclosure provides a network device, including a processor and a transceiver connected to the processor,

wherein the transceiver is configured to send configuration information of a maximum transmitting power to a terminal device, the configuration information of the maximum transmitting power being configured to determine respective panel maximum transmitting powers $P_{CMAX,P}$ corresponding to uplink transmissions respectively performed by the terminal device via two antenna panels in a case of scheduling simultaneous transmission via multi-panel (STxMP) by multi-downlink control information (M-DCI),
wherein the terminal device includes a plurality of antenna panels and supports simultaneous uplink transmissions via the plurality of antenna panels.

An aspect of the present disclosure provides a computer-readable storage medium having executable instructions stored thereon, and the executable instructions are loaded and executed by a processor to implement the uplink power control method according to the above aspect.

An aspect of the present disclosure provides a chip including a programmable logic circuit or program, and the chip is configured to implement the uplink power control method according to the above aspect when running on a computer device.

An aspect of the present disclosure provides a computer program product that, when running on a processor of a computer device, causes the computer device to execute the uplink power control method according to the above aspect when running on a computer device.

The technical solution provided by the embodiments of the present disclosure includes at least the following beneficial effects.

By configuring the configuration information of the maximum transmitting power for the terminal device, the terminal device respectively determines, according to the configuration information of the maximum transmitting power, the maximum transmitting power of the uplink transmission via each panel when scheduling simultaneous transmission via multi-panel by M-DCI, so as to realize power control of the simultaneous transmission via multi-panel.

## BRIEF DESCRIPTION OF THE DRAWINGS

In order to more clearly illustrate the technical solution in the embodiments of the present disclosure, the accompanying drawings used in the description of the embodiments will be briefly described below. Obviously, the accompanying drawings in the following description are only some of the embodiments of the present disclosure, and a person skilled in the art may obtain other accompanying drawings on the basis of these drawings without creative labor.

FIG. 1 is a schematic diagram of a system architecture provided by an exemplary embodiment of the present disclosure;

FIG. 2 is a schematic diagram of single DCI scheduling provided by an exemplary embodiment of the present disclosure;

FIG. 3 is a schematic diagram of multi-DCI scheduling provided by an exemplary embodiment of the present disclosure;

FIG. 4 is a flowchart of an uplink power control method provided by an exemplary embodiment of the present disclosure;

FIG. 5 is a flowchart of an uplink power control method provided by an exemplary embodiment of the present disclosure;

FIG. 6 is a flowchart of an uplink power control method provided by an exemplary embodiment of the present disclosure;

FIG. 7 is a schematic diagram of a first transmission occasion and a second transmission occasion provided by an exemplary embodiment of the present disclosure;

FIG. 8 is a structural block diagram of an uplink power control device provided by an exemplary embodiment of the present disclosure;

FIG. 9 is a structural block diagram of an uplink power control device provided by an exemplary embodiment of the present disclosure; and

FIG. 10 is a schematic structure diagram of a communication device provided by an exemplary embodiment of the present disclosure.

## DETAILED DESCRIPTION

In order to make the object, technical solution and advantage of the present disclosure clearer, the implementations of the present disclosure will be described in further detail below in connection with the accompanying drawings.

Exemplary embodiments will be described herein in detail, examples of which are shown in the accompanying drawings. When the following description relates to the accompanying drawings, the same reference numerals in different accompanying drawings indicate the same or similar elements unless indicated otherwise. The implementations described in the following exemplary embodiments do not represent all the implementations consistent with the present disclosure. Rather, they are only examples of devices and methods consistent with some aspects of the present disclosure as detailed in the appended claims.

The terms used in the present disclosure are used solely for describing particular embodiments and are not intended to limit the present disclosure. The singular forms of "a", "an", "said", and "the" used in the present disclosure and the appended claims are also intended to include a plural form unless indicated otherwise. It is to be also understood that the term "and/or" as used herein refers to and include any or all possible combinations of one or more of the associated listed items.

It is to be understood that although the terms first, second, third, etc. may be used in the present disclosure to describe various information, such information should not be limited by these terms. These terms are used only to distinguish the same type of information from one another. For example, without departing from the scope of the present disclosure, first information may be referred to as second information, and similarly, second information may also be referred to as first information. Depending on the context, for example, the word "if" as used herein may be interpreted as "at the time of ......" or "when ......" or "in response to determining".

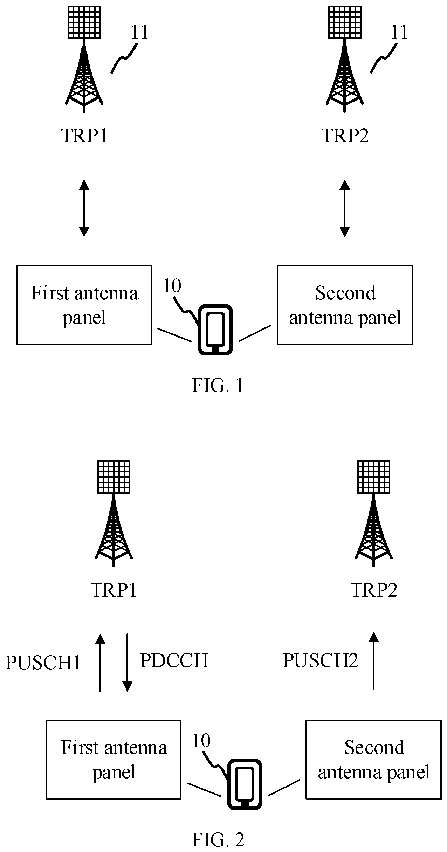

Referring to FIG. 1, the technical solution provided by the embodiments of the present disclosure is applied in a communication system including a network device 11 and a terminal device 10.

The network device 11 is a device that provides a wireless communication function for the terminal. Exemplarily, the network device may also be referred to as an access network device. The network device 11 includes, but is not limited to: gNB in 5G, radio network controller (RNC), node B (NB), base station controller (BSC), base transceiver station (BTS), home base station (e.g., home evolved node B, or home node B (HNB)), base band unit (BBU), transmission-reception point (TRP, transmitting and receiving point), transmitting point (TP), mobile switching center or the like. The network device in the present disclosure may also be a device providing wireless communication function for the terminal in other communication systems that may emerge in the future. As the communication technology develops, the name "network device" may change. For convenience of description, in the embodiments of the present disclosure, the above-mentioned devices providing the wireless communication function for the terminal device 10 are collectively referred to as network devices.

The TRP in the embodiments of the present disclosure may refer to any component (or collection of components) used to provide wireless access to a network, such as macro cell, femtocell, Wi-Fi access point (AP), or other device that supports wireless communication. The TRP may provide wireless access according to one or more wireless communication protocols, such as 5th generation new radio (5G NR), long term evolution (LTE), LTE advanced (LTE-A), high speed packet access (HSPA), wi-fi 802 .11a/b/g/n/ac /ac or the like.

Exemplarily, one access network device is deployed with one or more TRPs, e.g., the access network device corresponds to a first TRP and a second TRP. Alternatively, a first access network device corresponds to a first TRP, and a second access network device corresponds to a second TRP.

The terminal device 10 is a device that can provide voice and/or data connectivity to a user. For example, the terminal device includes a handheld device and a vehicle-mounted device with a wireless communication function, or the like. Currently, the terminal device may be a mobile phone, a tablet computer, a laptop computer, a PDA, a mobile internet device (MID), a wearable device, a virtual reality (VR) device, an augmented reality (AR) device, a wireless terminal in industrial control, a wireless terminal in self-driving, a wireless terminal in smart grid, a wireless terminal in transport safety, a wireless terminal in smart city, or a wireless terminal in smart home, an in-vehicle device, a computing device or other processing devices connected to wireless modems, and various forms of user equipment (UE), mobile station (MS), or the like.

It is to be noted that the above system architecture is only an illustrative example of the applicable system architecture of the embodiments of the present disclosure, and with comparison with the system architecture shown in FIG. 1, the applicable system architecture of the embodiments of the present disclosure may be provided with more or reduced entities.

Optionally, the terminal device has a plurality of panels, and supports simultaneous transmission via the plurality of panels. The plurality of panels may simultaneously perform uplink transmissions or downlink transmissions. For example, the terminal device has two panels, and the two panels send uplink channels/uplink signals to two TRPs, respectively. In general, the plurality of panels are oriented significantly differently, so the uplink PUSCH transmissions via the plurality of panels correspond to different quasi co-locations (QCL), i.e., SpatialRelationInfo.

Exemplarily, the network device 11 is deployed with one or more TRPs, e.g., the network device 11 correspondingly has TRP1 and TRP2. The terminal device sends beams in different directions using different panels, and the terminal device repeatedly transmits uplink channel using different transmitting beams that orient to different TRPs. The network device 11 receives, via the plurality of TRPs, the uplink channel repeatedly transmitted by the terminal device. Exemplarily, due to different relative orientations of different TRPs to the terminal device, the terminal device uses transmitting beams with different beam directions to send beams to the TRPs in the corresponding directions so as to repeatedly transmit the uplink channel.

The technical solution of the embodiments of the present disclosure may be applied to various communication systems, such as global system of mobile communication (GSM) system, code division multiple access (CDMA) system, wideband code division multiple access (WCDMA) system, general packet radio service (GPRS), long term evolution (LTE) system, LTE frequency division duplex (FDD) system, LTE time division duplex (TDD) system, advanced long term evolution (LTE-A) system, new radio (NR) system, evolved system of NR system, LTE-based access to unlicensed spectrum (LTE-U) system, NR-U system, universal mobile telecommunication system (UMTS), worldwide interoperability for microwave access (WIMA) communication system, wireless local area networks (WLAN), wireless fidelity (WiFi), next-generation communication system, or other communication systems.

In the R17, it standardizes the transmission of PUSCH (physical uplink shared channel) by the terminal device towards TRP directions of a plurality of base stations, which mainly standardizes the collaborative transmission under the TDM (time division multiplexing) transmission manner, so that the terminal device may send, via different transmission occasions (TO) in the time domain, different repetitions of the same information on the PUSCH to different TRPs of the base station in a time division manner. This method has lower requirements on the capability of the terminal device, which does not require the termina device to support the capability of sending beams simultaneously, and thus has a higher transmission delay.

For uplink transmission, spatial characteristics of actual channels of the PUSCH channels oriented to different TRPs may differ significantly, and therefore the QCL-D (Quasi-Colocation Type D) of the PUSCHs in different transmitting directions is considered to be different.

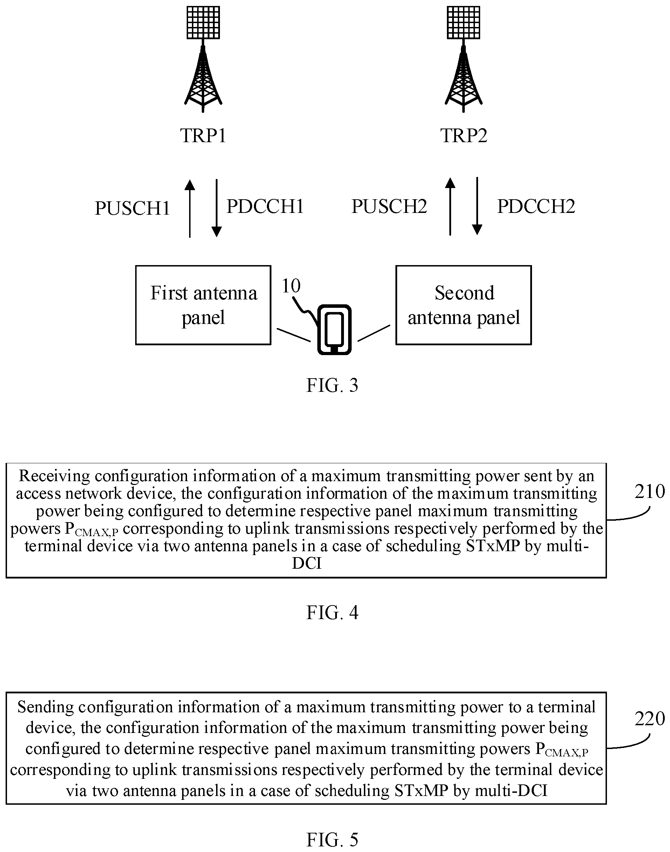

In the R18, it is desired to achieve simultaneous collaborative transmission to TRP directions of a plurality of base stations via a plurality of antenna panels (panels) of a terminal device, so as to increase reliability and throughput of the transmission, and at the same time, to effectively reduce the transmission delay in case of the plurality of TRPs. However such solution requires that the terminal device has the capability of sending a plurality of beams at the same time. The PUSCH transmission may be a multi-panel/TRP transmission scheduled based on a single PDCCH (physical downlink control channel), i.e., a multi-panel/TRP transmission based on S-DCI (single DCI) scheduling. For example, as shown in FIG. 2, a terminal device 10 receives PDCCH 1 sent by TRP 1, the PDCCH 1 carries DCI 1, and the DCI 1 includes scheduling information for PUSCH 1 and PUSCH 2. The terminal device sends the PUSCH 1 to the TRP 1 via a panel 1 based on the DCI 1, and sends the PUSCH 2 to the TRP 2 via a panel 2 based on the DCI 1. The PUSCH transmission may also be a multi-panel/TRP transmission scheduled based on different PDCCHs, i.e. M-DCI (multi DCI). For example, as shown in FIG. 3, a terminal device 10 receives PDCCH 1 sent by TRP 1 and receives PDCCH 2 sent by TRP2. The PDCCH 1 carries DCI 1, and the DCI 1 includes scheduling information of PUSCH 1. The PDCCH 2 carries DCI 2, and the DCI 2 includes scheduling information of PUSCH 2. The terminal device sends the PUSCH 1 to the TRP 1 via panel 1 based on the DCI 1 and sends the PUSCH 2 to the TRP 2 via panel 2 based on the DCI 2.

In a practical deployment, a link between a panel and a TRP may be a relatively ideal backhaul link supporting high throughput and very low backhaul latency, or may be a non-ideal backhaul link using xDSL (x digital subscriber line), microwave, relay or the like. The M-DCI-based NC-JT (non-coherent joint transmission) transmission solution was originally introduced primarily for the non-ideal backhaul situation, but can also be used for the ideal backhaul situation.

In the R18, for uplink MIMO (multiple input multiple output) enhancement, it considers realizing simultaneous uplink transmission to a plurality of TRPs via a plurality of panels of a terminal device, so as to further improve system transmission throughput and transmission reliability in the uplink.

In PDSCH (physical downlink shared channel) based on M-DCI scheduling, different PDSCHs support fully/partially/non-overlapping time-frequency resource allocation. For PUSCH based on DCI scheduling, a similar resource allocation may be considered to be applied. In the R16, the M-DCI PUSCH transmission solution mainly supports the collaborative transmission in TDM (time division multiplexing) manner. Currently, it is necessary to discuss which resource allocation situations are supported and how they should be support in the premise of a plurality of panels.

In a case of different PUSCH time domain resource allocations, as shown in formula I, the current PUSCH power control is mainly performed for transmission occasion. In order to support overlapping resource allocation, a relevant enhancement solution may be considered.

Formula I:

$$P_{PUSCH,p,f,c}(i,j,q_d,l) =$$

$$min \begin{cases} P_{CMAX,f,c}(i); \\ P_{O\_PUSCH,b,f,c}(j) + 10log_{10}\left(2^\mu \cdot M_{RB,b,f,c}^{PUSCH}(i)\right) + \alpha_{b,f,c}(j) \cdot PL_{b,f,c}(q_d) + \Delta_{TF,b,f,c}(i) + f_{b,f,c}(i,l) \end{cases}$$

where $P_{PUSCH,p,f,c}(i,j,q_d,l)$ is a transmitting power of a terminal device for transmitting PUSCH at an $i^{th}$ transmission occasion; $P_{CMAX,f,c}(i)$ is a maximum transmitting power on a carrier f of a service cell c determined by a terminal power class and configured by high-level signaling; $P_{O\_PUSCH,b,f,c}(j)$ is a target value of PUSCH power, which is given by a parameter configured by high-level signaling, a base station may configure a plurality of parameter sets for the terminal device, and j is an index of the parameter set; $P_{O\_PUSCH,b,f,c}(j) = P_{O\_NOMINAL\_PUSCH,b,f}(j) + P_{O\_UE\_PUSCH,b,f,c}(j)$ $P_{O\_NOMINAL\_PUSCH,b,f}(j)$ is a desired received power of PUSCH at a cell level, and $P_{O\_UE\_PUSCH,b,f,c}(j)$ is a power deviation of PUSCH at a UE level in dynamic scheduling; $\mu$ is a NR parameter set, which relates to a subcarrier spacing; $M_{RB,b,f,c}^{PUSCH}(i)$ is the number of RBs (resource block) occupied by the terminal device to send PUSCH in the $i^{th}$ PUSCH transmission occasion; $\alpha_{b,f,c}(j)$ is a path loss compensation factor, and j is an index of the parameter set; $PL_{b,f,c}(q_d)$ is a path loss measured by the terminal device, and $q_d$ is an index of a reference signal used to measure the path loss; $\Delta_{TF,b,f,c}(i)$ denotes a power offset determined by an MCS (modulation and coding solution) class; and $f_{b,f,c}(i,l)$ is a closed-loop power control adjusted value, and l is an index of closed-loop power control state, which is obtained by TPC (transmit power control) information mapping in PDCCH.

That is, the transmitting power of the terminal device for transmitting PUSCH is the minimum value between the maximum transmitting power $P_{CMAX,f,c}(i)$ and

$$P_{O\_PUSCH,b,f,c}(j) + 10log_{10}\left(2^\mu \cdot M_{RB,b,f,c}^{PUSCH}(i)\right) + \alpha_{b,f,c}(j) \cdot PL_{b,f,c}(q_d) + \Delta_{TF,b,f,c}(i)$$

$+ f_{b,f,c}(i,l)$.

Referring to FIG. 4, FIG. 4 illustrates a flowchart of an uplink power control method provided by an embodiment of the present disclosure, and the method may be applied in the communication system shown in FIG. 1, and is performed by a terminal device. The method includes:

**step 210,** receiving configuration information of a maximum transmitting power sent by an access network device, the configuration information of the maximum transmitting power being configured to determine respective panel maximum transmitting powers $P_{CMAX,P}$ corresponding to uplink transmissions respectively performed by the terminal device via two antenna panels in a case of scheduling simultaneous transmission via multi-panel (STxMP) by multi-DCI (M-DCI).

The terminal device includes a plurality of antenna panels and supports simultaneous uplink transmissions via the plurality of antenna panels. For example, the terminal device includes two, three, four or more panels. Optionally, the terminal device includes two panels: a first panel (first antenna panel) and a second panel (second antenna panel). The terminal device supports simultaneous uplink transmissions via the first panel and the second panel.

In a possible implementation, the panel maximum transmitting power $P_{CMAX,P}$ corresponding to each of the respective uplink transmissions may be determined for up to two antenna panels of the terminal device.

Exemplarily, the terminal device receives an RRC message sent by the access network device, and the RRC message carries the configuration information of the maximum transmitting power.

The configuration information of the maximum transmitting power includes one of:

- configuration information of a terminal maximum transmitting power $P_{CMAX}$ of the terminal device;
- configuration information of respective panel maximum transmitting powers $P_{CMAX,P}$ corresponding to the antenna panels of the terminal device; or
- the configuration information of the terminal maximum transmitting power $P_{CMAX}$ of the terminal device, and the configuration information of the respective panel maximum transmitting powers $P_{CMAX,P}$ corresponding to the antenna panels of the terminal device.

That is, the embodiment of the present disclosure provides three configuration types for the maximum transmitting power $P_{CMAX}$ on a certain carrier allowed by the terminal device:

- configuration type 1: only the terminal maximum transmitting power $P_{CMAX}$ on a certain carrier determined by a power class is configured for the terminal device;
- configuration type 2: the maximum transmitting power $P_{CMAX,p}$ of each panel is configured for terminal device that supports simultaneous transmission via multi-panel;
- configuration type 3: both of the above two types of configuration information are configured for the terminal device, i.e., both the maximum transmitting power $P_{CMAX}$ of the terminal device and the maximum transmitting power $P_{CMAX,p}$ of each panel are configured at the same time.

Exemplarily, the maximum transmitting power of the terminal device may be referred to as the terminal maximum transmitting power $P_{CMAX}$, and the maximum transmitting power of the panel may be referred to as the panel maximum transmitting power $P_{CMAX,p}$. p1 in $P_{CMAX,p1}$ denotes the panel maximum transmitting power of a panel 1 (a first panel), and p2 in $P_{CMAX,p2}$ denotes the panel maximum transmitting power of a panel 2 (a second panel).

The terminal device receives a plurality of DCIs sent by the access network device, and the plurality of DCIs schedules a plurality of panels of the terminal device for simultaneous uplink transmissions.

Exemplarily, the access network device schedules, via two DCIs, two panels of the terminal device to perform simultaneous uplink transmissions, then the terminal device determines the respective panel maximum transmitting powers $P_{CMAX,p}$ corresponding to the uplink transmissions respectively performed via the two panels based on the configuration information of the maximum transmitting power.

Exemplarily, the terminal device determines the respective panel maximum transmitting powers $P_{CMAX,p}$ corresponding to the uplink transmissions respectively performed via the two panels based on the configuration of the maximum transmitting power of the scheduled two panels in the configuration information of the maximum transmitting power.

If the access network device configures the maximum transmitting power for the terminal device using the configuration type 2 or the configuration type 3 as described above, the access network device may configure the respective panel maximum transmitting powers $P_{CMAX,p}$ for some or all of the panels of the terminal device. For example, the terminal device has four panels, and the access network device configures the terminal maximum transmitting power $P_{CMAX}$ for the terminal device, and the respective panel maximum transmitting powers $P_{CMAX,p}$ corresponding to the first panel and the second panel.

The two panels scheduled by the access network device via the two DCIs may be or may not be configured with the panel maximum transmitting powers $P_{CMAX,p}$, and the terminal device may determine the panel maximum transmitting power $P_{CMAX,p}$ of each panel in a corresponding manner according to the configuration of the maximum transmitting power.

For example, the access network device schedules, via two DCIs, a first panel and a second panel of the terminal device to perform simultaneous uplink transmissions. When the configuration information of the maximum transmitting power includes the terminal maximum transmitting power $P_{CMAX}$ but does not include the panel maximum transmitting powers $P_{CMAX,p}$ of the first panel and the second panel, the terminal device determines the respective panel maximum transmitting powers $P_{CMAX,p}$ corresponding to the first panel and the second panel by using a manner (e.g., a manner I, II, III or IV described below) corresponding to that the configuration information of the maximum transmitting power includes the configuration information of the terminal maximum transmitting power $P_{CMAX}$.

When the configuration information for the maximum transmitting power does not include the terminal maximum transmitting power $P_{CMAX}$ but includes the panel maximum transmitting powers $P_{CMAX,p}$ of the first panel and the second panel, the terminal device determines the respective panel maximum transmitting powers $P_{CMAX,p}$ corresponding to the first panel and the second panel by using a manner (e.g., a manner V described below) corresponding to that the configuration information of the maximum transmitting power includes the configuration information of the respective panel maximum transmitting powers $P_{CMAX,P}$ corresponding to the antenna panels of the terminal device.

When the configuration information of the maximum transmitting power includes the terminal maximum transmitting power $P_{CMAX}$ and also includes the panel maximum transmitting powers $P_{CMAX,P}$ of the first panel and the second panel, the terminal device determines the respective panel maximum transmitting powers $P_{CMAX,p}$ corresponding to the first panel and the second panel by using a manner (e.g., a manner VI, VII, VIII, or IX described below) corresponding to that the configuration information of the maximum transmitting power includes the configuration information of the terminal maximum transmitting power $P_{CMAX}$ of the terminal device and the configuration information of the respective panel maximum transmitting powers $P_{CMAX,P}$ corresponding to the two antenna panels.

The simultaneous transmission refers to that the transmission occasions of a plurality of uplink transmissions are fully/partially overlapped in a time domain, and corresponding frequency-domain resources may be fully/partially/non-overlapped.

For example, the terminal device receives a first PDCCH sent by the first TRP via the first panel, the first PDCCH includes a first DCI, and the first DCI schedules the first panel to send a first uplink channel (e.g., a PUSCH or PUCCH (physical uplink control channel))/first uplink signal in a first transmission occasion. The terminal device receives a second PDCCH sent by the second TRP via the second panel, the second PDCCH includes a second DCI, and the second DCI schedules the second panel to send a second uplink channel/second uplink signal in a second transmission occasion. The first transmission occasion and the second transmission occasion have an overlapping symbol in the time domain.

In a case of scheduling the STxMP by M-DCI, the terminal device respectively determines respective panel maximum transmitting powers $P_{CMAX,P}$ of uplink transmissions respectively performed via two antenna panels based on the configuration information of the maximum transmitting power. That is, the terminal device determines a first panel maximum transmitting power $P_{CMAX,P1}$ for the first panel to send a first uplink transmission based on the configuration information of the maximum transmitting power; and the terminal device determines a second panel maximum transmitting power $P_{CMAX,P2}$ for the second panel to send a second uplink transmission based on the configuration information of the maximum transmitting power.

The configuration information of the maximum transmitting power is configured to determine a first panel maximum transmitting power $P_{CMAX,P1}$ of the uplink transmission via the first antenna panel in the case of scheduling the STxMP by the M-DCI, and the configuration information of the maximum transmitting power is configured to determine a second panel maximum transmitting power $P_{CMAX,P2}$ of the uplink transmission via the second antenna panel in the case of scheduling the STxMP by the M-DCI.

Exemplarily, the terminal device determines that the panel maximum transmitting power $P_{CMAX,P}$ of the panel is in a symbol level, i.e., the terminal device determines the panel maximum transmitting power $P_{CMAX,P}$ of the panel in each symbol of the transmission occasion.

The first panel is configured to perform a first uplink transmission, the second panel is configured to perform a second uplink transmission, and a first transmission occasion of the first uplink transmission and a second transmission occasion of the second uplink transmission are overlapped in a time domain within a transmission slot. The configuration information of the maximum transmitting power is configured to determine the first panel maximum transmitting power $P_{CMAX,P1}$ of the first panel in each symbol of the first transmission occasion, and the configuration information of the maximum transmitting power is configured to determine the second panel maximum transmitting power $P_{CMAX,P2}$ of the second panel in each symbol of the second transmission occasion.

In view of the above, in the method provided in the embodiment, by configuring the configuration information of the maximum transmitting power for the terminal device, the terminal device respectively determines, according to the configuration information of the maximum transmitting power, the maximum transmitting power of the uplink transmission via each panel when scheduling the STxMP by the M-DCI, so as to realize power control of the STxMP.

Referring to FIG. 5, FIG. 5 illustrates a flowchart of an uplink power control method provided in an embodiment of the present disclosure, the method may be applied to the communication system shown in FIG. 1, and is performed by an access network device. The method includes:

**step 220:** sending configuration information of a maximum transmitting power to a terminal device, the configuration information of the maximum transmitting power being configured to determine respective panel maximum transmitting powers $P_{CMAX,P}$ corresponding to uplink transmissions respectively performed by the terminal device via two antenna panels in a case of scheduling simultaneous transmission via multi-panel (STxMP) by multi-downlink control information (M-DCI).

The terminal device includes a plurality of antenna panels and supports simultaneous uplink transmissions via the plurality of antenna panels.

In a possible implementation, the panel maximum transmitting power $P_{CMAX,P}$ corresponding to each of the respective uplink transmissions may be determined for up to two antenna panels of the terminal device.

Exemplarily, the access network device configures a maximum transmitting power for the terminal device.

The access network device may configure a terminal maximum transmitting power $P_{CMAX}$ for the terminal device, and/or the access network device may respectively configure a panel maximum transmitting power $P_{CMAX,p}$ for each panel of the terminal device.

Exemplarily, when the access network device schedules a plurality of panels of the terminal device for simultaneous uplink transmissions, the terminal device may respectively determine the panel maximum transmitting power $P_{CMAX,p}$ corresponding to each panel based on the maximum transmitting power configured by the access network device.

Exemplarily, the access network device configures the terminal maximum transmitting power $P_{CMAX}$ for the terminal device based on a power class of the terminal device. The power class of the terminal device is a maximum output power of any transmission bandwidth within the channel bandwidth of the NR carrier. The power class of the terminal device corresponds to a maximum transmitting power $P_{CMAX}$, or corresponds to a value range of the maximum transmitting power $P_{CMAX}$.

The embodiment of the present disclosure provides an power control enhancement solution for simultaneous uplink transmissions via multi-panel based on M-DCI scheduling, which provides a plurality of power enhancement control solutions for uplink transmissions (e.g., PUSCH) via different panels with an overlapping time domain and an overlapping or non-overlapping frequency domain in a transmission occasion of the same slot, in order to achieve simultaneous uplink transmissions from a plurality of panels to a plurality of TRPs, thereby improving throughput rate and transmission reliability of the uplink transmission.

In view of the above, in the method provided in the embodiment, by configuring the configuration information of the maximum transmitting power for the terminal device, the terminal device respectively determines, according to the configuration information of the maximum transmitting power, the maximum transmitting power of the uplink transmission via each panel when scheduling the STxMP by the M-DCI, so as to realize power control of the STxMP.

Exemplarily, an exemplary embodiment in which a terminal device interacts with an access network device is given.

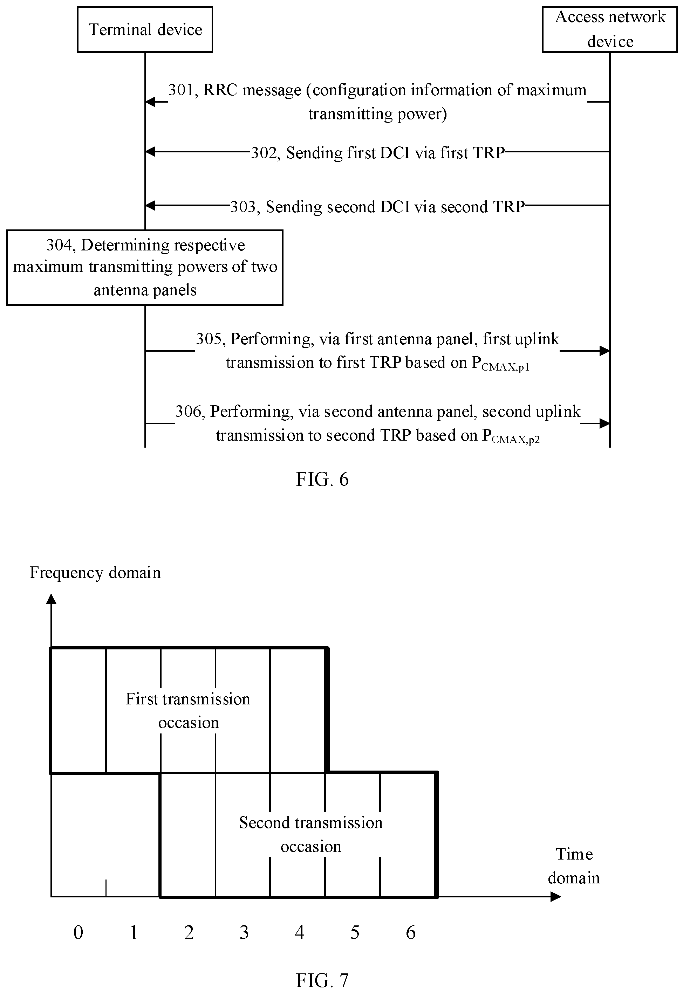

Referring to FIG. 6, FIG. 6 illustrates a flowchart of an uplink power control method provided by an embodiment of the present disclosure, and the method may be applied to the communication system shown in FIG. 1, and is performed by a terminal device and an access network device. The method includes the following steps.

In **step 301,** the access network device sends an RRC message to the terminal device, the RRC message including configuration information of a maximum transmitting power.

The access network device configures the maximum transmitting power for the terminal device via the RRC message. The terminal device receives the RRC message sent by the access network device and reads the configuration information of the maximum transmitting power in the RRC message.

For example, the access network device configures a terminal maximum transmitting power $P_{CMAX}$ for the terminal device.

Alternatively, the access network device configures a first panel maximum transmitting power $P_{CMAX,p1}$ and a second panel maximum transmitting power $P_{CMAX,p2}$ for the terminal device.

Alternatively, the access network device configures the terminal maximum transmitting power $P_{CMAX}$, the first panel maximum transmitting power $P_{CMAX,p1}$ and the second panel maximum transmitting power $P_{CMAX,p2}$ for the terminal device.

In **step 302,** the access network device sends a first DCI to a first panel of the terminal device via a first TRP.

The first DCI is configured to schedule the terminal device to send a first uplink channel (e.g., PUSCH or PUCCH)/first uplink signal (e.g., SRS (sounding reference signal)) to the first TRP via the first panel in a first transmission occasion.

In **step 303,** the access network device sends a second DCI to a second panel of the terminal device via a second TRP.

The second DCI is configured to schedule the terminal device to send a second uplink channel (e.g., PUSCH or PUCCH)/second uplink signal (e.g., SRS) to the second TRP via the second panel in a second transmission occasion.

The first transmission occasion and the second transmission occasion have an overlapping symbol in the time domain. For example, as shown in FIG. 7, the first transmission occasion includes symbol 0 to symbol 4, and the second transmission occasion includes symbol 2 to symbol 6. The first transmission occasion and the second transmission occasion have overlapping symbols in the time domain, i.e., symbol 2 to symbol 4.

The first transmission occasion and the second transmission occasion are overlapped/partially overlapped/not overlapped in the frequency domain.

That is, the access network device schedules the first panel and the second panel for simultaneous uplink transmissions via the multi-DCI.

In **step 304,** in a case of scheduling STxMP by M-DCI, the terminal device respectively determines panel maximum transmitting powers $P_{CMAX,P}$ of a plurality of panels based on the configuration information of the maximum transmitting power.

In a possible implementation, the panel maximum transmitting power $P_{CMAX,P}$ corresponding to each of the respective uplink transmissions may be determined for up to two antenna panels of the terminal device.

Exemplarily, an embodiment of the present disclosure provides various manners for determining the panel maximum transmitting powers $P_{CMAX,p}$ for respective panels depending on different configuration types of the maximum transmitting power, which are to be described in subsequent embodiments.

Exemplarily, the first transmission occasion and the second transmission occasion have an overlapping symbol in the time domain, and the overlapping symbol includes at least one symbol. The terminal device determines a first panel maximum transmitting power $P_{CMAX,p1}$ of the first panel in the overlapping symbol based on the configuration information of the maximum transmitting power; and determines a second panel maximum transmitting power $P_{CMAX,p2}$ of the second panel in the overlapping symbol based on the configuration information of the maximum transmitting power.

Optionally, the first transmission occasion also includes a first non-overlapping symbol that does not overlap with the second transmission occasion, and the first non-overlapping symbol includes at least one symbol. The terminal device determines the first panel maximum transmitting power $P_{CMAX,p1}$ of the first panel in the first non-overlapping symbol based on the configuration information of the maximum transmitting power.

Optionally, the second transmission occasion also includes a second non-overlapping symbol that does not overlap with the first transmission occasion, and the second non-overlapping symbol includes at least one symbol. The terminal device determines the second panel maximum transmitting power $P_{CMAX,p2}$ of the second panel in the second non-overlapping symbol based on the configuration information of the maximum transmitting power.

In **step 305,** the terminal device performs, via the first panel, a first uplink transmission to the first TRP based on the first panel maximum transmitting power $P_{CMAX,p1}$.

Exemplarily, the terminal device controls the transmitting powers of the respective panels based on the panel maximum transmitting powers $P_{CMAX,p}$ of the respective panels.

For example, the terminal device controls the transmitting power of the first panel for sending a PUSCH in respective symbols of the first transmission occasion based on Formula II.

Formula II:

$$P_{PUSCH,p1,p,f,c}(i, j, q_d, l, a) =$$

$$min \begin{cases} P_{CMAX,p1,f,c}(i, a); \\ P_{O\_PUSCH,b,f,c}(j) + 10log_{10}\left(2^{\mu} \cdot M_{RB,b,f,c}^{PUSCH}(i)\right) + \alpha_{b,f,c}(j) \cdot PL_{b,f,c}(q_d) + \Delta_{TF,b,f,c}(i) + f_{b,f,c}(i,l) \end{cases}$$

where $P_{PUSCH,p1,p,f,c}(i,j,q_d,l,a)$ is a transmitting power of the terminal device for sending, via the first panel, a PUSCH in an $a^{th}$ symbol of an $i^{th}$ transmission occasion; $P_{CMAX,p1,f,c}(i, a)$ is a maximum transmitting power of the first panel for sending the PUSCH in the $a^{th}$ symbol of the $i^{th}$ transmission occasion; $P_{O\_PUSCH,b,f,c}(j)$ is a target power value corresponding to the PUSCH sent by the first panel, which is given by a parameter configured by a high-level signaling, and the base station may configure a plurality of parameter sets for the terminal device, and j is the index of the parameter set; $P_{O\_PUSCH,b,f,c}(j) = P_{O\_NOMINAL\_PUSCH,b,f}(j) + P_{O\_UE\_PUSCH,b,f,c}(j)$ $P_{O\_NOMINAL\_PUSCH,b,f}(j)$ is a desired received power of PUSCH at a cell level, and $P_{O\_UE\_PUSCH,b,f,c}(j)$ is a power deviation of PUSCH at a UE level in dynamic scheduling; $\mu$ is a NR parameter set corresponding to the PUSCH sent by the first panel, which relates to a subcarrier spacing; $M_{RB,b,f,c}^{PUSCH}(i)$ is the number of RBs (resource block) occupied by the first panel of the terminal device to send the PUSCH in the $i^{th}$ PUSCH transmission occasion; $\alpha_{b,f,c}(j)$ is a path loss compensation factor corresponding to the PUSCH sent by the first panel, and j is an index of the parameter set; $PL_{b,f,c}(q_d)$ is a path loss corresponding to the PUSCH sent by the first panel; $\Delta_{TF,b,f,c}(i)$ denotes a power offset determined by an MCS (modulation and coding solution) class; and $f_{b,f,c}(i,l)$ is a closed-loop power control adjusted value corresponding to the PUSCH sent by the first panel, and l is an index of closed-loop power control state corresponding to the PUSCH sent by the first panel, which is obtained by TPC information mapping in PDCCH.

That is, the transmitting power of the terminal device for sending, via the first panel, the first PUSCH in symbol a is a minimum value between the maximum transmitting power of the first panel for sending the PUSCH in the symbol a $P_{CMAX,p1,f,c}(i,a)$ and

$$P_{O\_PUSCH,b,f,c}(j) + 10log_{10}\left(2^{\mu} \cdot M_{RB,b,f,c}^{PUSCH}(i)\right) + \alpha_{b,f,c}(j) \cdot PL_{b,f,c}(q_d) + \Delta_{TF,b,f,c}(i) + f_{b,f,c}(i,l).$$

In **step 306,** the terminal device performs, via the second panel, a second uplink transmission to the second TRP based on the second panel maximum transmitting power $P_{CMAX,p2}$.

For example, the terminal device controls the transmitting power of the second panel for sending a PUSCH in respective symbols of the second transmission occasion based on Formula III.

Formula III:

$$P_{PUSCH,p2,f,c}(i, j, q_d, l, a) =$$

$$min \begin{cases} P_{CMAX,p2,f,c}(i, a); \\ P_{O\_PUSCH,b,f,c}(j) + 10log_{10}\left(2^\mu \cdot M_{RB,b,f,c}^{PUSCH}(i)\right) + \alpha_{b,f,c}(j) \cdot PL_{b,f,c}(q_d) + \Delta_{TF,b,f,c}(i) + f_{b,f,c}(i, l) \end{cases}$$

where $P_{PUSCH,p2,f,c}(i,j,q_d,l,a)$ is a transmitting power of the terminal device for sending, via the second panel, a PUSCH in an $a^{th}$ symbol of an $i^{th}$ transmission occasion; $P_{CMAX,p2,f,c}(i, a)$ is a maximum transmitting power of the second panel for sending the PUSCH in the $a^{th}$ symbol of the $i^{th}$ transmission occasion; $P_{O\_PUSCH,b,f,c}(j)$ is a target power value corresponding to the PUSCH sent by the second panel, which is given by a parameter configured by a high-level signaling, and the base station may configure a plurality of parameter sets for the terminal device, and j is the index of the parameter set; $P_{O\_PUSCH,b,f,c}(j) = P_{O\_NOMINAL\_PUSCH,b,f,c}(j) + P_{O\_UE\_PUSCH,b,f,c}(j)$, $P_{O\_NOMINAL\_PUSCH,b,f,c}(j)$ is a desired received power of PUSCH at a cell level, and $P_{O\_UE\_PUSCH,b,f,c}(j)$ is a power deviation of PUSCH at a UE level in dynamic scheduling; $\mu$ is a NR parameter set corresponding to the PUSCH sent by the second panel, which relates to a subcarrier spacing;

$M_{RB,b,f,c}^{PUSCH}(i)$ is the number of RBs (resource block) occupied by the second panel of the terminal device to send the PUSCH in the $i^{th}$ PUSCH transmission occasion; $\alpha_{b,f,c}(j)$ is a path loss compensation factor corresponding to the PUSCH sent by the second panel, and j is an index of the parameter set; $PL_{b,f,c}(q_d)$ is a path loss corresponding to the PUSCH sent by the second panel; $\Delta_{TF,b,f,c}(i)$ denotes a power offset determined by an MCS class; and $f_{b,f,c}(i,l)$ is a closed-loop power control adjusted value corresponding to the PUSCH sent by the second panel, and l is an index of closed-loop power control state corresponding to the PUSCH sent by the second panel, which is obtained by TPC information mapping in PDCCH.

That is, the transmitting power of the terminal device for sending, via the second panel, the second PUSCH in symbol a is a minimum value between the maximum transmitting power of the second panel for sending the PUSCH in the symbol a $P_{CMAX,p2,f,c}(i,a)$ and

$$P_{O\_PUSCH,b,f,c}(j) + 10log_{10}\left(2^\mu \cdot M_{RB,b,f,c}^{PUSCH}(i)\right) + \alpha_{b,f,c}(j) \cdot PL_{b,f,c}(q_d) + \Delta_{TF,b,f,c}(i) + f_{b,f,c}(i,l).$$

In view of the above, in the method provided in the embodiment, by configuring the configuration information of the maximum transmitting power for the terminal device, when scheduling the STxMP by the M-DCI, the terminal device respectively determines, according to the configuration information of the maximum transmitting power, the maximum transmitting power of the uplink transmission via each panel, and then determines, according to the maximum transmitting power corresponding to each panel, the transmitting power of the uplink transmission via each panel, so as to realize power control of the uplink transmission. Moreover, for the case where a plurality of uplink transmission occasions are overlapped in the time domain, the panel maximum transmitting powers of one panel in respective symbols of the transmission occasion may be determined respectively, so as to achieve power control at the symbol level, thereby improving the precision of power control.

Exemplarily, in view of different configurations of the maximum transmitting power of the scheduled two panels, an embodiment of the present disclosure provides a plurality of methods for determining the panel maximum transmitting power of each panel.

**1. The configuration information of the maximum transmitting power includes configuration information of a terminal maximum transmitting power $P_{CMAX}$ of the terminal device.**

The respective panel maximum transmitting powers $P_{CMAX,P}$ corresponding to the uplink transmissions respectively performed via the two antenna panels are determined by one of the following manners.

In a possible implementation, the respective panel maximum transmitting powers $P_{CMAX,P}$ corresponding to the respective uplink transmissions may be determined for up to two antenna panels of the terminal device by one of the following manners.

**Manner I:** the respective panel maximum transmitting powers $P_{CMAX,P}$ corresponding to the uplink transmissions respectively performed via the two antenna panels are obtained by dividing the terminal maximum transmitting power $P_{CMAX}$ equally.

For example, the access network device sends the configuration information of the terminal maximum transmitting power $P_{CMAX}$ to the terminal device, and configures the terminal maximum transmitting power $P_{CMAX}$ as 26dbm, then the first panel maximum transmitting power of the first panel is 1/2*26dbm=23dbm, and the second panel maximum transmitting power of the second panel is 1/2*26dbm=23dbm.

**Manner II**: The respective panel maximum transmitting powers $P_{CMAX,P}$ corresponding to the uplink transmissions respectively performed via the two antenna panels are obtained by allocating the terminal maximum transmitting power $P_{CMAX}$ based on a power allocation factor, wherein the power allocation factor is predefined, or configured by the network device, or reported by the terminal device.

For example, the power allocation factor is a ratio A of the first panel maximum transmitting power $P_{CMAX,P1}$ to the second panel maximum transmitting power $P_{CMAX,P2}$, i.e., A= $P_{CMAX,P1}/P_{CMAX,P2}$. Then the first panel maximum transmitting power $P_{CMAX,P1}$ is equal to $A*P_{CMAX}/(1+A)$, and the second panel maximum transmitting power $P_{CMAX,P2}$ is equal to $P_{CMAX}/(1+A)$.

Alternatively, the first panel has a first power allocation factor a, and the second panel has a second power allocation factor b, and a+b=1. Then the first panel maximum transmitting power $P_{CMAX,P1}$ is equal to $a*P_{CMAX}$, and the second panel maximum transmitting power $P_{CMAX,P2}$ is equal to $b*P_{CMAX}$.

Exemplarily, the terminal device receives configuration information of the power allocation factor sent by the access network device. Alternatively, the terminal device reads the power allocation factor stored locally. Alternatively, the terminal device reports the power allocation factor to the access network device.

For example, the terminal device determines the power allocation factor based on the transmission capabilities of the two panels and reports the power allocation factor to the access network device.

**Manner III:** The respective panel maximum transmitting powers $P_{CMAX,P}$ corresponding to the uplink transmissions respectively performed via the two antenna panels are determined based on indication information, and the indication information is configured to indicate the respective panel maximum transmitting powers $P_{CMAX,P}$ of the two antenna panels.

Optionally, the access network device sends the indication information to the terminal device, and the indication information is configured to indicate the panel maximum transmitting power $P_{CMAX,P1}$ of the first panel and the panel maximum transmitting power $P_{CMAX,P2}$ of the second panel.

Exemplarily, the two antenna panels of the terminal device include a first antenna panel and a second antenna panel, the first antenna panel is used to perform a first uplink transmission in a first transmission occasion, and the second antenna panel is used to perform a second uplink transmission in a second transmission occasion, and the first transmission occasion and the second transmission occasion have an overlapping symbol within the transmission slot. For example, as shown in FIG. 7, there are overlapping symbols between the first transmission occasion and the second transmission occasion within the transmission slot, i.e., symbol 2, symbol 3, symbol 4.

Optionally, the first transmission occasion also includes a first non-overlapping symbol that does not overlap with the second transmission occasion within the transmission slot. For example, the first transmission occasion also includes the first non-overlapping symbols, i.e., symbol 0, symbol 1, which do not overlap with the second transmission occasion within the transmission slot.

Optionally, the second transmission occasion also includes a second non-overlapping symbol that does not overlap with the first transmission occasion within the transmission slot. For example, the second transmission occasion also includes the second non-overlapping symbols, i.e., symbol 5, symbol 6, which do not overlap with the first transmission occasion within the transmission slot.

Exemplarily, for the overlapping relationship of the symbols in the two transmission occasions described above, the panel maximum transmitting power of the panel is determined for each symbol respectively.

For the overlapping symbol, the panel maximum transmitting power of the panel in each symbol may be determined respectively using the above described manner I, manner II or manner III.

That is, for the uplink transmission in the overlapping symbol, the respective panel maximum transmitting powers $P_{CMAX,P}$ corresponding to the uplink transmissions respectively performed via the two antenna panels are determined by one of:

manner I: obtaining the respective panel maximum transmitting powers $P_{CMAX,P}$ corresponding to the uplink transmissions respectively performed via the first antenna panel and the second antenna panel by dividing the terminal maximum transmitting power $P_{CMAX}$ equally;

manner II: obtaining the respective panel maximum transmitting powers $P_{CMAX,P}$ corresponding to the uplink transmissions respectively performed via the first antenna panel and the second antenna panel by allocating the terminal maximum transmitting power $P_{CMAX}$ based on a power allocation factor, wherein the power allocation factor is predefined, or is configured by the network device, or is reported by the terminal device; and

manner III: determining the respective panel maximum transmitting powers $P_{CMAX,P}$ corresponding to the uplink transmissions respectively performed via the first antenna panel and the second antenna panel based on indication information, the indication information being configured to indicate the respective panel maximum transmitting powers $P_{CMAX,P}$ of the two antenna panels.

For the non-overlapping symbol, the panel maximum transmitting power of the panel in each symbol may be determined respectively using the above described manner I, manner II or manner III. Alternatively, the terminal maximum transmitting power is directly determined as the panel maximum transmitting power of the panel in the non-overlapping symbol.

That is, for the first uplink transmission in the first non-overlapped symbol, the first panel maximum transmitting power $P_{CMAX,P1}$ corresponding to the first uplink transmission via the first antenna panel is determined by one of:

> manner I: obtaining the first panel maximum transmitting power $P_{CMAX,P1}$ corresponding to the first uplink transmission via the first antenna panel by dividing the terminal maximum transmitting power $P_{CMAX}$ equally;
> manner II: obtaining the first panel maximum transmitting power $P_{CMAX,P1}$ corresponding to the first uplink transmission via the first antenna panel by allocating the terminal maximum transmitting power $P_{CMAX}$ based on the power allocation factor, wherein the power allocation factor is predefined, or is configured by the network device, or is reported by the terminal device;
> manner III: determining the first panel maximum transmitting power $P_{CMAX,P1}$ corresponding to the first uplink transmission via the first antenna panel based on the indication information, the indication information being configured to indicate the respective panel maximum transmitting powers $P_{CMAX,P}$ of the two antenna panels; or
> manner IV: determining the terminal maximum transmitting power $P_{CMAX}$ as the first panel maximum transmitting power $P_{CMAX,P1}$ corresponding to the first uplink transmission via the first antenna panel.

For the second uplink transmission in the second non-overlapped symbol, the second panel maximum transmitting power $P_{CMAX,P2}$ corresponding to the second uplink transmission via the second antenna panel is determined by one of:

> manner I: obtaining the second panel maximum transmitting power $P_{CMAX,P2}$ corresponding to the second uplink transmission via the second antenna panel by dividing the terminal maximum transmitting power $P_{CMAX}$ equally;
> manner II: obtaining the second panel maximum transmitting power $P_{CMAX,P2}$ corresponding to the second uplink transmission via the second antenna panel by allocating the terminal maximum transmitting power $P_{CMAX}$ based on the power allocation factor, wherein the power allocation factor is predefined, or is configured by the network device, or is reported by the terminal device;
> manner III: determining the second panel maximum transmitting power $P_{CMAX,P2}$ corresponding to the second uplink transmission via the second antenna panel based on the indication information, the indication information being configured to indicate the respective panel maximum transmitting powers $P_{CMAX,P}$ of the two antenna panels; or
> manner IV: determining the terminal maximum transmitting power $P_{CMAX}$ as the second panel maximum transmitting power $P_{CMAX,P2}$ corresponding to the second uplink transmission via the second antenna panel.

**2. The configuration information of the maximum transmitting power includes configuration information of respective panel maximum transmitting powers $P_{CMAX,P}$ corresponding to the first panel and the second panel.**

Exemplarily, the two antenna panels include a first antenna panel and a second antenna panel, and the configuration information of the maximum transmitting power incudes configuration information of a first panel maximum transmitting power $P_{CMAX,P1}$ of the first antenna panel and a second panel maximum transmitting power $P_{CMAX,P2}$ of the second antenna panel.

In a possible implementation, the respective panel maximum transmitting powers $P_{CMAX,P}$ corresponding to the respective uplink transmissions may be determined for up to two antenna panels of the terminal device by one of the following manners.

**Manner V:** The panel maximum transmitting power $P_{CMAX,P}$ of a first uplink transmission via the first antenna panel is the first panel maximum transmitting power $P_{CMAX,P1}$, and the panel maximum transmitting power $P_{CMAX,P}$ of a second uplink transmission via the second antenna panel is the second panel maximum transmitting power $P_{CMAX,P2}$.

In the case where the access network device configures a panel maximum transmitting power for each panel, the power control of each panel is performed based on the panel maximum transmitting power of the corresponding panel.

Exemplarily, the panel maximum transmitting power $P_{CMAX,P}$ of the first panel in each symbol (including the overlapping symbol and the non-overlapping symbol) of the first transmission occasion is determined to be the first panel maximum transmitting power $P_{CMAX,P1}$, and the panel maximum transmitting power $P_{CMAX,P}$ of the second panel in each symbol (including the overlapping symbol and the non-overlapping symbol) of the second transmission occasion is determined to be the second panel maximum transmitting power $P_{CMAX,P2}$.

**3. The configuration information of the maximum transmitting power includes configuration information of a terminal maximum transmitting power $P_{CMAX}$ of the terminal device and configuration information of respective panel maximum transmitting powers $P_{CMAX,P}$ corresponding to the first panel and the second panel.**

That is, the two antenna panels include a first antenna panel and a second antenna panel, and the configuration information of the maximum transmitting power comprises: configuration information of a terminal maximum transmitting power $P_{CMAX}$ of the terminal device, and configuration information of a first panel maximum transmitting power $P_{CMAX,P1}$ of the first antenna panel and a second panel maximum transmitting power $P_{CMAX,P2}$ of the second antenna panel.

The first antenna panel is configured to perform a first uplink transmission in a first transmission occasion, the second antenna panel is configured to perform a second uplink transmission in a second transmission occasion, and the first transmission occasion and the second transmission occasion have an overlapping symbol within a transmission slot

Optionally, the first transmission occasion further includes a first non-overlapping symbol that does not overlap with the second transmission occasion in the transmission slot.

Optionally, the second transmission occasion further includes a second non-overlapping symbol that does not overlap with the first transmission occasion in the transmission slot.

Since the maximum transmitting power of the terminal device in each symbol does exceed $P_{CMAX}$, for the relationship between $P_{CMAX}$ and $P_{CMAX,P1}+ P_{CMAX,P2}$, the following manners of determining the panel maximum transmitting powers of the respective panels are provided.

**Manner VI:** In a case where the terminal maximum transmitting power $P_{CMAX}$ is greater than a sum of the first panel maximum transmitting power $P_{CMAX,P1}$ and the second panel maximum transmitting power $P_{CMAX,P2}$, the panel maximum transmitting power $P_{CMAX,P}$ of a first uplink transmission via the first antenna panel is the first panel maximum transmitting power $P_{CMAX,P1}$, and the panel maximum transmitting power $P_{CMAX,P}$ of a second uplink transmission via the second antenna panel is the second panel maximum transmitting power $P_{CMAX,P2}$.

That is, when $P_{CMAX}> P_{CMAX,P1}+ P_{CMAX,P2}$, the panel maximum transmitting power of each panel may be controlled according to the $P_{CMAX,P}$ configured for each panel.

**Manner VII:** In a case where the terminal maximum transmitting power $P_{CMAX}$ is less than or equal to a sum of the first panel maximum transmitting power $P_{CMAX,P1}$ and the second panel maximum transmitting power $P_{CMAX,P2}$, the panel maximum transmitting power $P_{CMAX,P}$ of the first uplink transmission via the first antenna panel in the overlapping symbol is a half of the first panel maximum transmitting power $P_{CMAX,P1}$, and the panel maximum transmitting power $P_{CMAX,P}$ of the second uplink transmission via the second antenna panel in the overlapping symbol is a half of the second panel maximum transmitting power $P_{CMAX,P2}$.

That is, when $P_{CMAX}\leq P_{CMAX,P1}+ P_{CMAX,P2}$, the panel maximum transmitting power of each panel in the overlapping symbol is returned to be 1/2 of the configuration, i.e., $1/2* P_{CMAX,P}$.

For example, the terminal maximum transmitting power $P_{CMAX}$ configured by the access network device for the terminal device is 26 dbm, the first panel maximum transmitting power $P_{CMAX,P1}$ of the first panel is 26 dbm, and the second panel maximum transmitting power $P_{CMAX,P2}$ of the second panel is 26 dbm, so 26 dbm $\leq$ 26 dbm + 26 dbm. Then the panel maximum transmitting power of the first panel is 1/2*first panel maximum transmitting power $P_{CMAX,P1}$: 1/2*26dbm=23dbm, and the panel maximum transmitting power of the second panel is 1/2*second panel maximum transmitting power $P_{CMAX,P2}$: 1/2*26dbm=23dbm.

Exemplarily, when $P_{CMAX}\leq P_{CMAX,P1}+ P_{CMAX,P2}$, if the first panel and the second panel have the same transmission capability, the panel maximum transmitting power $P_{CMAX,P}$ of the first uplink transmission via the first antenna panel in the overlapping symbol is $1/2*P_{CMAX,P1}$, and the panel maximum transmitting power of the second uplink transmission via the second antenna panel in the overlapping symbol is $1/2*P_{CMAX,P2}$. The same transmission capability may refer to that two power amplifiers (PA) corresponding to the two panels have the same capability.

**Manner VIII:** In the case where the terminal maximum transmitting power $P_{CMAX}$ is less than or equal to the sum of the first panel maximum transmitting power $P_{CMAX,P1}$ and the second panel maximum transmitting power $P_{CMAX,P2}$, the panel maximum transmitting power $P_{CMAX,P}$ of the first uplink transmission via the first antenna panel in the overlapping symbol is a quotient obtained by dividing the first panel maximum transmitting power $P_{CMAX, P1}$ by a first capability factor, and the panel maximum transmitting power $P_{CMAX,P}$ of the second uplink transmission via the second antenna panel in the overlapping symbol is a quotient obtained by dividing the second panel maximum transmitting power $P_{CMAX, P2}$ by a second capability factor, wherein the first capability factor is determined based on a transmission capability of the first antenna panel, and the second capability factor is determined based on a transmission capability of the second antenna panel.

That is, when $P_{CMAX}\leq P_{CMAX,P1}+ P_{CMAX,P2}$, the panel maximum transmitting power of each panel in the overlapping symbol is returned to 1/B of the configuration, i.e., $1/B* P_{CMAX,P}$, wherein B is the capability factor determined based on the transmission capability of a respective panel.

For example, the terminal maximum transmitting power $P_{CMAX}$ configured by the access network device for the terminal device is 26 dbm, the first panel maximum transmitting power $P_{CMAX,P1}$ of the first panel is 26 dbm, and the second panel maximum transmitting power $P_{CMAX,P2}$ of the second panel is 26 dbm, so 26 dbm≤26 dbm + 26 dbm. The first capability factor of the first panel is 2, and the second capability factor of the second panel is 4, then the panel maximum transmitting power of the first panel is 1/2*first panel maximum transmitting power $P_{CMAX,P1}$: 1/2*26dbm=23dbm, and the panel maximum transmitting power of the second panel is 1/4*second panel maximum transmitting power $P_{CMAX,P2}$: 1/4*26dbm=20dbm.

Exemplarily, when $P_{CMAX}≤P_{CMAX,P1}+ P_{CMAX,P2}$, if the transmission capabilities of the first panel and the second panel are different, the panel maximum transmitting power $P_{CMAX,P}$ of the first uplink transmission via the first antenna panel in the overlapping symbol is $P_{CMAX,P1}/B1$, and the panel maximum transmitting power $P_{CMAX,P}$ of the second uplink transmission via the second antenna panel in the overlapping symbol is $P_{CMAX,P2}/B2$, wherein B1 is determined based on the transmission capability of the first antenna panel, and B2 is determined based on the transmission capability of the second antenna panel. Exemplarily, the stronger the transmission capability of the panel is, the smaller the capability factor thereof is. The different transmission capabilities may refer to that two power amplifiers (PA) corresponding to the two panels have different capabilities.

**Manner IX:** In the case where the terminal maximum transmitting power $P_{CMAX}$ is less than or equal to the sum of the first panel maximum transmitting power $P_{CMAX,P1}$ and the second panel maximum transmitting power $P_{CMAX,P2}$, the panel maximum transmitting power $P_{CMAX,P}$ of the first uplink transmission via the first antenna panel in the first non-overlapping symbol is the first panel maximum transmitting power $P_{CMAX,P1}$. In the case where the terminal maximum transmitting power $P_{CMAX}$ is less than or equal to the sum of the first panel maximum transmitting power $P_{CMAX,P1}$ and the second panel maximum transmitting power $P_{CMAX,P2}$, the panel maximum transmitting power $P_{CMAX,P}$ of the second uplink transmission via the second antenna panel in the second non-overlapping symbol is the second panel maximum transmitting power $P_{CMAX,P2}$.

That is, when $P_{CMAX}≤P_{CMAX,P1}+ P_{CMAX,P2}$, the panel maximum transmitting power of each panel in the overlapping symbol may be controlled based on the $P_{CMAX,P}$ configured for the respective panel.

It is to be noted that the foregoing description of the configuration information of the maximum transmitting power may also be applied in the embodiment performed by the terminal device as described in step 210; and may also be applied in the embodiment performed by the access network device as described in step 220, which will not be repeated in the present disclosure.

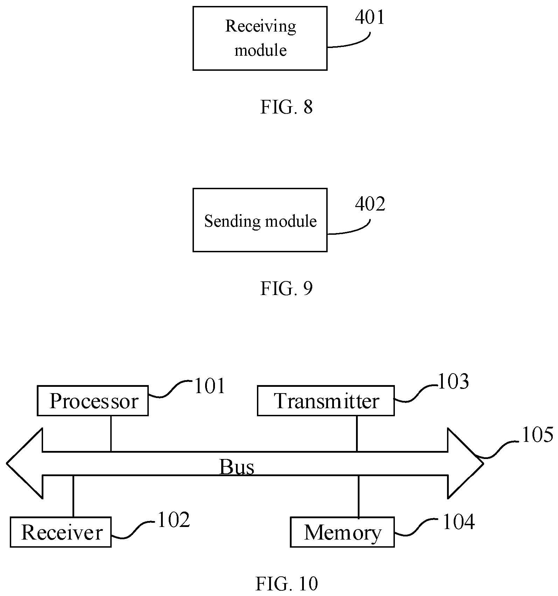

FIG. 8 illustrates a structural block diagram of an uplink power control device provided by an exemplary embodiment of the present disclosure. The device may be realized as a terminal device or as a part of a terminal device. The device includes:

> a receiving module 401, configured to receive configuration information of a maximum transmitting power sent by an access network device, the configuration information of the maximum transmitting power being configured to determine respective panel maximum transmitting powers $P_{CMAX,P}$ corresponding to uplink transmissions respectively performed by the terminal device via two antenna panels in a case of scheduling simultaneous transmission via multi-panel (STxMP) by multi-downlink control information (M-DCI),
> wherein the terminal device includes a plurality of antenna panels and supports simultaneous uplink transmissions via the plurality of antenna panels.

In an optional embodiment, the two antenna panels include a first antenna panel and a second antenna panel,

> the configuration information of the maximum transmitting power is configured to determine a first panel maximum transmitting power $P_{CMAX,P1}$ of the uplink transmission via the first antenna panel in the case of scheduling the STxMP by the M-DCI, and
> the configuration information of the maximum transmitting power is configured to determine a second panel maximum transmitting power $P_{CMAX,P2}$ of the uplink transmission via the second antenna panel in the case of scheduling the STxMP by the M-DCI.

In an optional embodiment, the first antenna panel is configured to perform a first uplink transmission, the second antenna panel is configured to perform a second uplink transmission, and a first transmission occasion of the first uplink transmission and a second transmission occasion of the second uplink transmission are overlapped in a time domain within a transmission slot,

> the configuration information of the maximum transmitting power is configured to determine the first panel maximum transmitting power $P_{CMAX,P1}$ of the first antenna panel in each symbol of the first transmission occasion, and
> the configuration information of the maximum transmitting power is configured to determine the second panel maximum transmitting power $P_{CMAX,P2}$ of the second antenna panel in each symbol of the second transmission occasion.

In an optional embodiment, the receiving module 401 is configured to receive, via the first antenna panel, first DCI sent by a first transmission-reception point (TRP), the first DCI being configured to schedule the first antenna panel to perform the first uplink transmission in the first transmission occasion; and

the receiving module 401 is configured to receive, via the second antenna panel, second DCI sent by a second TRP, the second DCI being configured to schedule the second antenna panel to perform the second uplink transmission in the second transmission occasion.

In an optional embodiment, the configuration information of the maximum transmitting power includes one of:

configuration information of a terminal maximum transmitting power $P_{CMAX}$ of the terminal device;

configuration information of respective panel maximum transmitting powers $P_{CMAX,P}$ corresponding to the antenna panels of the terminal device; or

the configuration information of the terminal maximum transmitting power $P_{CMAX}$ of the terminal device, and the configuration information of the respective panel maximum transmitting powers $P_{CMAX,P}$ corresponding to the antenna panels of the terminal device.

In an optional embodiment, the receiving module 401 is configured to receive a radio resource control (RRC) message sent by the access network device, the RRC message including the configuration information of the maximum transmitting power.

In an optional embodiment, the configuration information of the maximum transmitting power includes the configuration information of the terminal maximum transmitting power $P_{CMAX}$ of the terminal device,

the respective panel maximum transmitting powers $P_{CMAX,P}$ corresponding to the uplink transmissions respectively performed via the two antenna panels are determined by one of:

obtaining the respective panel maximum transmitting powers $P_{CMAX,P}$ corresponding to the uplink transmissions respectively performed via the two antenna panels by dividing the terminal maximum transmitting power $P_{CMAX}$ equally; or

obtaining the respective panel maximum transmitting powers $P_{CMAX,P}$ corresponding to the uplink transmissions respectively performed via the two antenna panels by allocating the terminal maximum transmitting power $P_{CMAX}$ based on a power allocation factor; or

determining the respective panel maximum transmitting powers $P_{CMAX,P}$ corresponding to the uplink transmissions respectively performed via the two antenna panels based on indication information, the indication information being configured to indicate the respective panel maximum transmitting powers $P_{CMAX,P}$ of the two antenna panels,

wherein the power allocation factor is predefined, or is configured by the network device, or is reported by the terminal device.

In an optional embodiment, the two antenna panels include a first antenna panel and a second antenna panel, the first antenna panel is configured to perform a first uplink transmission in a first transmission occasion, the second antenna panel is configured to perform a second uplink transmission in a second transmission occasion, and the first transmission occasion and the second transmission occasion have an overlapping symbol within a transmission slot,

for the uplink transmission in the overlapping symbol, the respective panel maximum transmitting powers $P_{CMAX,P}$ corresponding to the uplink transmissions respectively performed via the two antenna panels are determined by one of:

obtaining the respective panel maximum transmitting powers $P_{CMAX,P}$ corresponding to the uplink transmissions respectively performed via the first antenna panel and the second antenna panel by dividing the terminal maximum transmitting power $P_{CMAX}$ equally; or

obtaining the respective panel maximum transmitting powers $P_{CMAX,P}$ corresponding to the uplink transmissions respectively performed via the first antenna panel and the second antenna panel by allocating the maximum transmitting power $P_{CMAX}$ based on the power allocation factor; or

determining the respective panel maximum transmitting powers $P_{CMAX,P}$ corresponding to the uplink transmissions respectively performed via the first antenna panel and the second antenna panel based on the indication information, the indication information being configured to indicate the respective panel maximum transmitting powers $P_{CMAX,P}$ of the two antenna panels,

wherein the power allocation factor is predefined, or is configured by the network device, or is reported by the terminal device.

In an optional embodiment, the first transmission occasion further includes a first non-overlapping symbol that does not overlap with the second transmission occasion in the transmission slot,

for the first uplink transmission in the first non-overlapping symbol, a first panel maximum transmitting power $P_{CMAX,P1}$ corresponding to the first uplink transmission via the first antenna panel is determined by one of:

determining the terminal maximum transmitting power $P_{CMAX}$ as the first panel maximum transmitting power $P_{CMAX,P1}$ corresponding to the first uplink transmission via the first antenna panel; or

obtaining the first panel maximum transmitting power $P_{CMAX,P1}$ corresponding to the first uplink transmission via the first antenna panel by dividing the terminal maximum transmitting power $P_{CMAX}$ equally; or

obtaining the first panel maximum transmitting power $P_{CMAX,P1}$ corresponding to the first uplink transmission via the first antenna panel by allocating the terminal maximum transmitting power $P_{CMAX}$ based on the power allocation factor; or

determining the first panel maximum transmitting power $P_{CMAX,P1}$ corresponding to the first uplink transmission via the first antenna panel based on the indication information, the indication information being configured to indicate the respective panel maximum transmitting powers $P_{CMAX,P}$ of the two antenna panels,

wherein the power allocation factor is predefined, or is configured by the network device, or is reported by the terminal device.

In an optional embodiment, the second transmission occasion further includes a second non-overlapping symbol that does not overlap with the first transmission occasion in the transmission slot,

for the second uplink transmission in the second non-overlapping symbol, a second panel maximum transmitting power $P_{CMAX,P2}$ corresponding to the second uplink transmission via the second antenna panel is determined by one of:

determining the terminal maximum transmitting power $P_{CMAX}$ as the second panel maximum transmitting power $P_{CMAX,P2}$ corresponding to the second uplink transmission via the second antenna panel; or

obtaining the second panel maximum transmitting power $P_{CMAX,P2}$ corresponding to the second uplink transmission via the second antenna panel by dividing the terminal maximum transmitting power $P_{CMAX}$ equally; or

obtaining the second panel maximum transmitting power $P_{CMAX,P2}$ corresponding to the second uplink transmission via the second antenna panel by allocating the terminal maximum transmitting power $P_{CMAX}$ based on the power allocation factor; or

determining the second panel maximum transmitting power $P_{CMAX,P2}$ corresponding to the second uplink transmission via the second antenna panel based on the indication information, the indication information being configured to indicate the respective panel maximum transmitting powers $P_{CMAX,P}$ of the two antenna panels,

wherein the power allocation factor is predefined, or is configured by the network device, or is reported by the terminal device.

In an optional embodiment, the two antenna panels include a first antenna panel and a second antenna panel,

the configuration information of the maximum transmitting power includes configuration information of a first panel maximum transmitting power $P_{CMAX,P1}$ of the first antenna panel and a second panel maximum transmitting power $P_{CMAX,P2}$ of the second antenna panel,

the panel maximum transmitting power $P_{CMAX,P}$ of a first uplink transmission via the first antenna panel is the first panel maximum transmitting power $P_{CMAX,P1}$, and

the panel maximum transmitting power $P_{CMAX,P}$ of a second uplink transmission via the second antenna panel is the second panel maximum transmitting power $P_{CMAX,P2}$.

In an optional embodiment, the two antenna panels include a first antenna panel and a second antenna panel, and

the configuration information of the maximum transmitting power includes: configuration information of a terminal maximum transmitting power $P_{CMAX}$ of the terminal device, and configuration information of a first panel maximum transmitting power $P_{CMAX,P1}$ of the first antenna panel and a second panel maximum transmitting power $P_{CMAX,P2}$ of the second antenna panel.

In an optional embodiment, in a case where the terminal maximum transmitting power $P_{CMAX}$ is greater than a sum of the first panel maximum transmitting power $P_{CMAX,P1}$ and the second panel maximum transmitting power $P_{CMAX,P2}$, the panel maximum transmitting power $P_{CMAX,P}$ of a first uplink transmission via the first antenna panel is the first panel maximum transmitting power $P_{CMAX,P1}$, and the panel maximum transmitting power $P_{CMAX,P}$ of a second uplink transmission via the second antenna panel is the second panel maximum transmitting power $P_{CMAX,P2}$.

In an optional embodiment, the first antenna panel is configured to perform a first uplink transmission in a first transmission occasion, the second antenna panel is configured to perform a second uplink transmission in a second transmission occasion, the first transmission occasion and the second transmission occasion have an overlapping symbol within a transmission slot,

in a case where the terminal maximum transmitting power $P_{CMAX}$ is less than or equal to a sum of the first panel maximum transmitting power $P_{CMAX,P1}$ and the second panel maximum transmitting power $P_{CMAX,P2}$, the panel maximum transmitting power $P_{CMAX,P}$ of the first uplink transmission via the first antenna panel in the overlapping symbol is a half of the first panel maximum transmitting power $P_{CMAX,P1}$, and the panel maximum transmitting power $P_{CMAX,P}$ of the second uplink transmission via the second antenna panel in the overlapping symbol is a half of the second panel maximum transmitting power $P_{CMAX,P2}$, or

in the case where the terminal maximum transmitting power $P_{CMAX}$ is less than or equal to the sum of the first panel maximum transmitting power $P_{CMAX,P1}$ and the second panel maximum transmitting power $P_{CMAX,P2}$, the panel maximum transmitting power $P_{CMAX,P}$ of the first uplink transmission via the first antenna panel in the overlapping symbol is a quotient obtained by dividing the first panel maximum transmitting power $P_{CMAX,\ P1}$ by a first capability factor, and the panel maximum transmitting power $P_{CMAX,P}$ of the second uplink transmission via the second antenna panel in the overlapping symbol is a quotient obtained by dividing the second panel maximum transmitting power $P_{CMAX,\ P2}$ by a second capability factor,

wherein the first capability factor is determined based on a transmission capability of the first antenna panel, and the second capability factor is determined based on a transmission capability of the second antenna panel.

In an optional embodiment, the first transmission occasion further includes a first non-overlapping symbol that does not overlap with the second transmission occasion within the transmission slot, and

in the case where the terminal maximum transmitting power $P_{CMAX}$ is less than or equal to the sum of the first panel maximum transmitting power $P_{CMAX,P1}$ and the second panel maximum transmitting power $P_{CMAX,P2}$, the panel maximum transmitting power $P_{CMAX,P}$ of the first uplink transmission via the first antenna panel in the first non-overlapping symbol is the first panel maximum transmitting power $P_{CMAX,P1}$.

In an optional embodiment, the second transmission occasion further includes a second non-overlapping symbol that does not overlap with the first transmission occasion within the transmission slot, and

in the case where the terminal maximum transmitting power $P_{CMAX}$ is less than or equal to the sum of the first panel maximum transmitting power $P_{CMAX,P1}$ and the second panel maximum transmitting power $P_{CMAX,P2}$, the panel maximum transmitting power $P_{CMAX,P}$ of the second uplink transmission via the second antenna panel in the second non-overlapping symbol is the second panel maximum transmitting power $P_{CMAX,P2}$.

FIG. 9 illustrates a structural block diagram of an uplink power control device provided by an exemplary embodiment of the present disclosure. The device may be realized as an access network device or as a part of an access network device. The device includes:

a sending module 402, configured to send configuration information of a maximum transmitting power to a terminal device, the configuration information of the maximum transmitting power being configured to determine respective panel maximum transmitting powers $P_{CMAX,P}$ corresponding to uplink transmissions respectively performed by the terminal device via two antenna panels in a case of scheduling simultaneous transmission via multi-panel (STxMP) by multi-downlink control information (M-DCI),

wherein the terminal device includes a plurality of antenna panels and supports simultaneous uplink transmissions via the plurality of antenna panels.

In an optional embodiment, the two antenna panels include a first antenna panel and a second antenna panel,

the configuration information of the maximum transmitting power is configured to determine a first panel maximum transmitting power $P_{CMAX,P1}$ of the uplink transmission via the first antenna panel in the case of scheduling the STxMP by the M-DCI, and

the configuration information of the maximum transmitting power is configured to determine a second panel maximum transmitting power $P_{CMAX,P2}$ of the uplink transmission via the second antenna panel in the case of scheduling the STxMP by the M-DCI.

In an optional embodiment, the first antenna panel is configured to perform a first uplink transmission, the second antenna panel is configured to perform a second uplink transmission, and a first transmission occasion of the first uplink transmission and a second transmission occasion of the second uplink transmission are overlapped in a time domain within a transmission slot,

the configuration information of the maximum transmitting power is configured to determine the first panel maximum transmitting power $P_{CMAX,P1}$ of the first antenna panel in each symbol of the first transmission occasion, and

the configuration information of the maximum transmitting power is configured to determine the second panel maximum transmitting power $P_{CMAX,P2}$ of the second antenna panel in each symbol of the second transmission occasion.

In an optional embodiment, the access network device includes a first transmission-reception point (TRP) and/or a second TRP, and

the sending module 402 is configured to send, via the first TRP, first DCI to the first antenna panel, the first DCI being configured to schedule the first antenna panel to perform the first uplink transmission in the first transmission occasion; and/or
the sending module 402 is configured to send, via the second TRP, second DCI to the second antenna panel, the second DCI being configured to schedule the second antenna panel to perform the second uplink transmission in the second transmission occasion.

In an optional embodiment, the configuration information of the maximum transmitting power includes one of:

configuration information of a terminal maximum transmitting power $P_{CMAX}$ of the terminal device;
configuration information of respective panel maximum transmitting powers $P_{CMAX,P}$ corresponding to the antenna panels of the terminal device; or
the configuration information of the terminal maximum transmitting power $P_{CMAX}$ of the terminal device, and the configuration information of the respective panel maximum transmitting powers $P_{CMAX,P}$ corresponding to the antenna panels of the terminal device.

In an optional embodiment, the sending module 402 is further configured to send a radio resource control (RRC) message to the terminal device, the RRC message including the configuration information of the maximum transmitting power.
In an optional embodiment, the configuration information of the maximum transmitting power includes the configuration information of the terminal maximum transmitting power $P_{CMAX}$ of the terminal device,

the respective panel maximum transmitting powers $P_{CMAX,P}$ corresponding to the uplink transmissions respectively performed via the two antenna panels are determined by one of:
obtaining the respective panel maximum transmitting powers $P_{CMAX,P}$ corresponding to the uplink transmissions respectively performed via the two antenna panels by dividing the terminal maximum transmitting power $P_{CMAX}$ equally; or
obtaining the respective panel maximum transmitting powers $P_{CMAX,P}$ corresponding to the uplink transmissions respectively performed via the two antenna panels by allocating the terminal maximum transmitting power $P_{CMAX}$ based on a power allocation factor; or
determining the respective panel maximum transmitting powers $P_{CMAX,P}$ corresponding to the uplink transmissions respectively performed via the two antenna panels based on indication information, the indication information being configured to indicate the respective panel maximum transmitting powers $P_{CMAX,P}$ of the two antenna panels,
wherein the power allocation factor is predefined, or is configured by the network device, or is reported by the terminal device.

In an optional embodiment, the two antenna panels include a first antenna panel and a second antenna panel, the first antenna panel is configured to perform a first uplink transmission in a first transmission occasion, the second antenna panel is configured to perform a second uplink transmission in a second transmission occasion, and the first transmission occasion and the second transmission occasion have an overlapping symbol within a transmission slot,

for the uplink transmission in the overlapping symbol, the respective panel maximum transmitting powers $P_{CMAX,P}$ corresponding to the uplink transmissions respectively performed via the two antenna panels are determined by one of:
obtaining the respective panel maximum transmitting powers $P_{CMAX,P}$ corresponding to the uplink transmissions respectively performed via the first antenna panel and the second antenna panel by dividing the terminal maximum transmitting power $P_{CMAX}$ equally; or
obtaining the respective panel maximum transmitting powers $P_{CMAX,P}$ corresponding to the uplink transmissions respectively performed via the first antenna panel and the second antenna panel by allocating the maximum transmitting power $P_{CMAX}$ based on the power allocation factor; or
determining the respective panel maximum transmitting powers $P_{CMAX,P}$ corresponding to the uplink transmissions respectively performed via the first antenna panel and the second antenna panel based on the indication information, the indication information being configured to indicate the respective panel maximum transmitting powers $P_{CMAX,P}$ of the two antenna panels,

wherein the power allocation factor is predefined, or is configured by the network device, or is reported by the terminal device.

In an optional embodiment, the first transmission occasion further includes a first non-overlapping symbol that does not overlap with the second transmission occasion in the transmission slot,

for the first uplink transmission in the first non-overlapping symbol, a first panel maximum transmitting power $P_{CMAX,P1}$ corresponding to the first uplink transmission via the first antenna panel is determined by one of:
determining the terminal maximum transmitting power $P_{CMAX}$ as the first panel maximum transmitting power $P_{CMAX,P1}$ corresponding to the first uplink transmission via the first antenna panel; or
obtaining the first panel maximum transmitting power $P_{CMAX,P1}$ corresponding to the first uplink transmission via the first antenna panel by dividing the terminal maximum transmitting power $P_{CMAX}$ equally; or
obtaining the first panel maximum transmitting power $P_{CMAX,P1}$ corresponding to the first uplink transmission via the first antenna panel by allocating the terminal maximum transmitting power $P_{CMAX}$ based on the power allocation factor; or
determining the first panel maximum transmitting power $P_{CMAX,P1}$ corresponding to the first uplink transmission via the first antenna panel based on the indication information, the indication information being configured to indicate the respective panel maximum transmitting powers $P_{CMAX,P}$ of the two antenna panels,
wherein the power allocation factor is predefined, or is configured by the network device, or is reported by the terminal device.

In an optional embodiment, the second transmission occasion further includes a second non-overlapping symbol that does not overlap with the first transmission occasion in the transmission slot,

for the second uplink transmission in the second non-overlapping symbol, a second panel maximum transmitting power $P_{CMAX,P2}$ corresponding to the second uplink transmission via the second antenna panel is determined by one of:
determining the terminal maximum transmitting power $P_{CMAX}$ as the second panel maximum transmitting power $P_{CMAX,P2}$ corresponding to the second uplink transmission via the second antenna panel; or
obtaining the second panel maximum transmitting power $P_{CMAX,P2}$ corresponding to the second uplink transmission via the second antenna panel by dividing the terminal maximum transmitting power $P_{CMAX}$ equally; or
obtaining the second panel maximum transmitting power $P_{CMAX,P2}$ corresponding to the second uplink transmission via the second antenna panel by allocating the terminal maximum transmitting power $P_{CMAX}$ based on the power allocation factor; or
determining the second panel maximum transmitting power $P_{CMAX,P2}$ corresponding to the second uplink transmission via the second antenna panel based on the indication information, the indication information being configured to indicate the respective panel maximum transmitting powers $P_{CMAX,P}$ of the two antenna panels,
wherein the power allocation factor is predefined, or is configured by the network device, or is reported by the terminal device.

In an optional embodiment, the two antenna panels include a first antenna panel and a second antenna panel,

the configuration information of the maximum transmitting power includes configuration information of a first panel maximum transmitting power $P_{CMAX,P1}$ of the first antenna panel and a second panel maximum transmitting power $P_{CMAX,P2}$ of the second antenna panel,
the panel maximum transmitting power $P_{CMAX,P}$ of a first uplink transmission via the first antenna panel is the first panel maximum transmitting power $P_{CMAX,P1}$, and
the panel maximum transmitting power $P_{CMAX,P}$ of a second uplink transmission via the second antenna panel is the second panel maximum transmitting power $P_{CMAX,P2}$.

In an optional embodiment, the two antenna panels include a first antenna panel and a second antenna panel, and
the configuration information of the maximum transmitting power includes: configuration information of a terminal maximum transmitting power $P_{CMAX}$ of the terminal device, and configuration information of a first panel maximum transmitting power $P_{CMAX,P1}$ of the first antenna panel and a second panel maximum transmitting power $P_{CMAX,P2}$ of the second antenna panel.

In an optional embodiment, in a case where the terminal maximum transmitting power $P_{CMAX}$ is greater than a sum of the first panel maximum transmitting power $P_{CMAX,P1}$ and the second panel maximum transmitting power $P_{CMAX,P2}$, the panel maximum transmitting power $P_{CMAX,P}$ of a first uplink transmission via the first antenna panel is the first panel maximum transmitting power $P_{CMAX,P1}$, and the panel maximum transmitting power $P_{CMAX,P}$ of a second uplink transmission via the second antenna panel is the second panel maximum transmitting power $P_{CMAX,P2}$.

In an optional embodiment, the first antenna panel is configured to perform a first uplink transmission in a first transmission occasion, the second antenna panel is configured to perform a second uplink transmission in a second transmission occasion, the first transmission occasion and the second transmission occasion have an overlapping symbol within a transmission slot,

in a case where the terminal maximum transmitting power $P_{CMAX}$ is less than or equal to a sum of the first panel maximum transmitting power $P_{CMAX,P1}$ and the second panel maximum transmitting power $P_{CMAX,P2}$, the panel maximum transmitting power $P_{CMAX,P}$ of the first uplink transmission via the first antenna panel in the overlapping symbol is a half of the first panel maximum transmitting power $P_{CMAX,P1}$, and the panel maximum transmitting power $P_{CMAX,P}$ of the second uplink transmission via the second antenna panel in the overlapping symbol is a half of the second panel maximum transmitting power $P_{CMAX,P2}$; or

in the case where the terminal maximum transmitting power $P_{CMAX}$ is less than or equal to the sum of the first panel maximum transmitting power $P_{CMAX,P1}$ and the second panel maximum transmitting power $P_{CMAX,P2}$, the panel maximum transmitting power $P_{CMAX,P}$ of the first uplink transmission via the first antenna panel in the overlapping symbol is a quotient obtained by dividing the first panel maximum transmitting power $P_{CMAX, P1}$ by a first capability factor, and the panel maximum transmitting power $P_{CMAX,P}$ of the second uplink transmission via the second antenna panel in the overlapping symbol is a quotient obtained by dividing the second panel maximum transmitting power $P_{CMAX, P2}$ by a second capability factor,

wherein the first capability factor is determined based on a transmission capability of the first antenna panel, and the second capability factor is determined based on a transmission capability of the second antenna panel.

In an optional embodiment, the first transmission occasion further includes a first non-overlapping symbol that does not overlap with the second transmission occasion within the transmission slot, and

in the case where the terminal maximum transmitting power $P_{CMAX}$ is less than or equal to the sum of the first panel maximum transmitting power $P_{CMAX,P1}$ and the second panel maximum transmitting power $P_{CMAX,P2}$, the panel maximum transmitting power $P_{CMAX,P}$ of the first uplink transmission via the first antenna panel in the first non-overlapping symbol is the first panel maximum transmitting power $P_{CMAX,P1}$.

In an optional embodiment, the second transmission occasion further includes a second non-overlapping symbol that does not overlap with the first transmission occasion within the transmission slot, and

in the case where the terminal maximum transmitting power $P_{CMAX}$ is less than or equal to the sum of the first panel maximum transmitting power $P_{CMAX,P1}$ and the second panel maximum transmitting power $P_{CMAX,P2}$, the panel maximum transmitting power $P_{CMAX,P}$ of the second uplink transmission via the second antenna panel in the second non-overlapping symbol is the second panel maximum transmitting power $P_{CMAX,P2}$.

FIG. 10 illustrates a schematic structure diagram of a communication device (a terminal device or an access network device) according to an exemplary embodiment of the present disclosure, and the communication device includes a processor 101, a receiver 102, a transmitter 103, a memory 104, and a bus 105.

The processor 101 includes one or more processing cores, and the processor 101 performs various functional applications and information processing by running software programs and modules.

The receiver 102 and the transmitter 103 may be implemented as one communication component, which may be a communication chip.

The memory 104 is connected to the processor 101 via the bus 105.

The memory 104 may be used to store at least one instruction, and the processor 101 is used to execute the at least one instruction to implement the various steps in the method embodiment described above.

In addition, the memory 104 may be implemented by any type of volatile or non-volatile storage devices or a combination thereof, and the volatile or non-volatile storage device includes, but is not limited to: a magnetic or optical disc, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

When the communication device is implemented as a terminal device, the processor and the transceiver in the communication device involved in the embodiment of the present disclosure may perform the steps in any of the methods shown above which are performed by the terminal device, which are not repeated herein.

In a possible implementation, when the communication device is implemented as a terminal device,

the transceiver is configured to receive configuration information of a maximum transmitting power sent by an access network device, the configuration information of the maximum transmitting power being configured to determine respective panel maximum transmitting powers $P_{CMAX,P}$ corresponding to uplink transmissions respectively performed by the terminal device via two antenna panels in a case of scheduling simultaneous transmission via multi-panel (STxMP) by multi-downlink control information (M-DCI),

wherein the terminal device includes a plurality of antenna panels and supports simultaneous uplink transmissions via the plurality of antenna panels.

When the communication device is implemented as a network device, the processor and the transceiver in the communication device involved in the embodiment of the present disclosure may perform the steps in any of the methods shown above which are performed by the network device, which are not repeated herein.

In a possible implementation, when the communication device is implemented as a network device,

the transceiver is configured to send configuration information of a maximum transmitting power to a terminal device, the configuration information of the maximum transmitting power being configured to determine respective panel maximum transmitting powers $P_{CMAX,P}$ corresponding to uplink transmissions respectively performed by the terminal device via two antenna panels in a case of scheduling simultaneous transmission via multi-panel (STxMP) by multi-downlink control information (M-DCI),

wherein the terminal device includes a plurality of antenna panels and supports simultaneous uplink transmissions via the plurality of antenna panels.

In an exemplary embodiment, there is also provided a computer-readable storage medium having stored therein at least one instruction, at least one program, a code set or an instruction set that, when being loaded and executed by a processor, implements the uplink power control method performed by a communication device provided by the respective method embodiment above.

In an exemplary embodiment, there is also provided a chip including a programmable logic circuit and/or a program instruction, and the chip, when running on a computer device, implements the uplink power control method according to the above aspect.

In an exemplary embodiment, there is also provided a computer program product that, when running on a processor of a computer device, causes the computer device to implement the uplink power control method according to the above aspect.

A person skilled in the art may understand that all or some of the steps for implementing the above embodiment may be accomplished by hardware, or may be accomplished by a program that instructs the relevant hardware, the program may be stored in a computer-readable storage medium, and the storage medium mentioned above may be a read-only memory, a magnetic disc, or a compact disc, and the like.

The above mentioned are only optional embodiments of the present disclosure, and are not intended to limit the present disclosure, and any modifications, equivalent replacements, improvements, or the like made within the spirit and principle of the present disclosure shall be included in the protection scope of the present disclosure.

## Claims

1. An uplink power control method, performed by a terminal device, comprising:

   receiving configuration information of a maximum transmitting power sent by an access network device, the configuration information of the maximum transmitting power being configured to determine respective panel maximum transmitting powers $P_{CMAX,P}$ corresponding to uplink transmissions respectively performed by the terminal device via two antenna panels in a case of scheduling simultaneous transmission via multi-panel, STxMP, by multi-downlink control information, M-DCI,

   wherein the terminal device comprises a plurality of antenna panels and supports simultaneous uplink transmissions via the plurality of antenna panels.

2. The uplink power control method according to claim 1, wherein the two antenna panels comprise a first antenna panel and a second antenna panel,

   the configuration information of the maximum transmitting power is configured to determine a first panel maximum transmitting power $P_{CMAX,P1}$ of the uplink transmission via the first antenna panel in the case of scheduling the STxMP by the M-DCI, and

the configuration information of the maximum transmitting power is configured to determine a second panel maximum transmitting power $P_{CMAX,P2}$ of the uplink transmission via the second antenna panel in the case of scheduling the STxMP by the M-DCI.

3. The uplink power control method according to claim 2, wherein the first antenna panel is configured to perform a first uplink transmission, the second antenna panel is configured to perform a second uplink transmission, and a first transmission occasion of the first uplink transmission and a second transmission occasion of the second uplink transmission are overlapped in a time domain within a transmission slot,

the configuration information of the maximum transmitting power is configured to determine the first panel maximum transmitting power $P_{CMAX,P1}$ of the first antenna panel in each symbol of the first transmission occasion, and
the configuration information of the maximum transmitting power is configured to determine the second panel maximum transmitting power $P_{CMAX,P2}$ of the second antenna panel in each symbol of the second transmission occasion.

4. The uplink power control method according to claim 3, further comprising:

receiving, via the first antenna panel, first DCI sent by a first transmission-reception point, TRP, the first DCI being configured to schedule the first antenna panel to perform the first uplink transmission in the first transmission occasion; and
receiving, via the second antenna panel, second DCI sent by a second TRP, the second DCI being configured to schedule the second antenna panel to perform the second uplink transmission in the second transmission occasion.

5. The uplink power control method according to any one of claims 1 to 4, wherein the configuration information of the maximum transmitting power comprises one of:

configuration information of a terminal maximum transmitting power $P_{CMAX}$ of the terminal device;
configuration information of respective panel maximum transmitting powers $P_{CMAX,P}$ corresponding to the antenna panels of the terminal device; or
the configuration information of the terminal maximum transmitting power $P_{CMAX}$ of the terminal device, and the configuration information of the respective panel maximum transmitting powers $P_{CMAX,P}$ corresponding to the antenna panels of the terminal device.

6. The uplink power control method according to claim 5, wherein receiving the configuration information of the maximum transmitting power sent by the access network device comprises:
receiving a radio resource control, RRC, message sent by the access network device, the RRC message comprising the configuration information of the maximum transmitting power.

7. The uplink power control method according to claim 5 or 6, wherein the configuration information of the maximum transmitting power comprises the configuration information of the terminal maximum transmitting power $P_{CMAX}$ of the terminal device,
the respective panel maximum transmitting powers $P_{CMAX,P}$ corresponding to the uplink transmissions respectively performed via the two antenna panels are determined by one of:

obtaining the respective panel maximum transmitting powers $P_{CMAX,P}$ corresponding to the uplink transmissions respectively performed via the two antenna panels by dividing the terminal maximum transmitting power $P_{CMAX}$ equally; or
obtaining the respective panel maximum transmitting powers $P_{CMAX,P}$ corresponding to the uplink transmissions respectively performed via the two antenna panels by allocating the terminal maximum transmitting power $P_{CMAX}$ based on a power allocation factor; or
determining the respective panel maximum transmitting powers $P_{CMAX,P}$ corresponding to the uplink transmissions respectively performed via the two antenna panels based on indication information, the indication information being configured to indicate the respective panel maximum transmitting powers $P_{CMAX,P}$ of the two antenna panels,
wherein the power allocation factor is predefined, or is configured by the network device, or is reported by the terminal device.

8. The uplink power control method according to claim 7, wherein the two antenna panels comprise a first antenna panel and a second antenna panel, the first antenna panel is configured to perform a first uplink transmission in a first transmission occasion, the second antenna panel is configured to perform a second uplink transmission in a second transmission occasion, and the first transmission occasion and the second transmission occasion have an overlapping symbol within a transmission slot,

for the uplink transmission in the overlapping symbol, the respective panel maximum transmitting powers $P_{CMAX,P}$ corresponding to the uplink transmissions respectively performed via the two antenna panels are determined by one of:

obtaining the respective panel maximum transmitting powers $P_{CMAX,P}$ corresponding to the uplink transmissions respectively performed via the first antenna panel and the second antenna panel by dividing the terminal maximum transmitting power $P_{CMAX}$ equally; or
obtaining the respective panel maximum transmitting powers $P_{CMAX,P}$ corresponding to the uplink transmissions respectively performed via the first antenna panel and the second antenna panel by allocating the maximum transmitting power $P_{CMAX}$ based on the power allocation factor; or
determining the respective panel maximum transmitting powers $P_{CMAX,P}$ corresponding to the uplink transmissions respectively performed via the first antenna panel and the second antenna panel based on the indication information, the indication information being configured to indicate the respective panel maximum transmitting powers $P_{CMAX,P}$ of the two antenna panels,
wherein the power allocation factor is predefined, or is configured by the network device, or is reported by the terminal device.

9. The uplink power control method according to claim 8, wherein the first transmission occasion further comprises a first non-overlapping symbol that does not overlap with the second transmission occasion in the transmission slot,

for the first uplink transmission in the first non-overlapping symbol, a first panel maximum transmitting power $P_{CMAX,P1}$ corresponding to the first uplink transmission via the first antenna panel is determined by one of:

determining the terminal maximum transmitting power $P_{CMAX}$ as the first panel maximum transmitting power $P_{CMAX,P1}$ corresponding to the first uplink transmission via the first antenna panel; or
obtaining the first panel maximum transmitting power $P_{CMAX,P1}$ corresponding to the first uplink transmission via the first antenna panel by dividing the terminal maximum transmitting power $P_{CMAX}$ equally; or
obtaining the first panel maximum transmitting power $P_{CMAX,P1}$ corresponding to the first uplink transmission via the first antenna panel by allocating the terminal maximum transmitting power $P_{CMAX}$ based on the power allocation factor; or
determining the first panel maximum transmitting power $P_{CMAX,P1}$ corresponding to the first uplink transmission via the first antenna panel based on the indication information, the indication information being configured to indicate the respective panel maximum transmitting powers $P_{CMAX,P}$ of the two antenna panels,
wherein the power allocation factor is predefined, or is configured by the network device, or is reported by the terminal device.

10. The uplink power control method according to claim 8, wherein the second transmission occasion further comprises a second non-overlapping symbol that does not overlap with the first transmission occasion in the transmission slot, for the second uplink transmission in the second non-overlapping symbol, a second panel maximum transmitting power $P_{CMAX,P2}$ corresponding to the second uplink transmission via the second antenna panel is determined by one of:

determining the terminal maximum transmitting power $P_{CMAX}$ as the second panel maximum transmitting power $P_{CMAX,P2}$ corresponding to the second uplink transmission via the second antenna panel; or
obtaining the second panel maximum transmitting power $P_{CMAX,P2}$ corresponding to the second uplink transmission via the second antenna panel by dividing the terminal maximum transmitting power $P_{CMAX}$ equally; or
obtaining the second panel maximum transmitting power $P_{CMAX,P2}$ corresponding to the second uplink transmission via the second antenna panel by allocating the terminal maximum transmitting power $P_{CMAX}$ based on the power allocation factor; or
determining the second panel maximum transmitting power $P_{CMAX,P2}$ corresponding to the second uplink transmission via the second antenna panel based on the indication information, the indication information being configured to indicate the respective panel maximum transmitting powers $P_{CMAX,P}$ of the two antenna panels,
wherein the power allocation factor is predefined, or is configured by the network device, or is reported by the terminal device.

**11.** The uplink power control method according to claim 5 or 6, wherein the two antenna panels comprise a first antenna panel and a second antenna panel,

the configuration information of the maximum transmitting power comprises configuration information of a first panel maximum transmitting power $P_{CMAX,P1}$ of the first antenna panel and a second panel maximum transmitting power $P_{CMAX,P2}$ of the second antenna panel,
the panel maximum transmitting power $P_{CMAX,P}$ of a first uplink transmission via the first antenna panel is the first panel maximum transmitting power $P_{CMAX,P1}$, and
the panel maximum transmitting power $P_{CMAX,P}$ of a second uplink transmission via the second antenna panel is the second panel maximum transmitting power $P_{CMAX,P2}$.

**12.** The uplink power control method according to claim 5 or 6, wherein the two antenna panels comprise a first antenna panel and a second antenna panel, and
the configuration information of the maximum transmitting power comprises: configuration information of a terminal maximum transmitting power $P_{CMAX}$ of the terminal device, and configuration information of a first panel maximum transmitting power $P_{CMAX,P1}$ of the first antenna panel and a second panel maximum transmitting power $P_{CMAX,P2}$ of the second antenna panel.

**13.** The uplink power control method according to claim 12, wherein
in a case where the terminal maximum transmitting power $P_{CMAX}$ is greater than a sum of the first panel maximum transmitting power $P_{CMAX,P1}$ and the second panel maximum transmitting power $P_{CMAX,P2}$, the panel maximum transmitting power $P_{CMAX,P}$ of a first uplink transmission via the first antenna panel is the first panel maximum transmitting power $P_{CMAX,P1}$, and the panel maximum transmitting power $P_{CMAX,P}$ of a second uplink transmission via the second antenna panel is the second panel maximum transmitting power $P_{CMAX,P2}$.

**14.** The uplink power control method according to claim 12, wherein the first antenna panel is configured to perform a first uplink transmission in a first transmission occasion, the second antenna panel is configured to perform a second uplink transmission in a second transmission occasion, the first transmission occasion and the second transmission occasion have an overlapping symbol within a transmission slot,

in a case where the terminal maximum transmitting power $P_{CMAX}$ is less than or equal to a sum of the first panel maximum transmitting power $P_{CMAX,P1}$ and the second panel maximum transmitting power $P_{CMAX,P2}$, the panel maximum transmitting power $P_{CMAX,P}$ of the first uplink transmission via the first antenna panel in the overlapping symbol is a half of the first panel maximum transmitting power $P_{CMAX,P1}$, and the panel maximum transmitting power $P_{CMAX,P}$ of the second uplink transmission via the second antenna panel in the overlapping symbol is a half of the second panel maximum transmitting power $P_{CMAX,P2}$, or
in the case where the terminal maximum transmitting power $P_{CMAX}$ is less than or equal to the sum of the first panel maximum transmitting power $P_{CMAX,P1}$ and the second panel maximum transmitting power $P_{CMAX,P2}$, the panel maximum transmitting power $P_{CMAX,P}$ of the first uplink transmission via the first antenna panel in the overlapping symbol is a quotient obtained by dividing the first panel maximum transmitting power $P_{CMAX,P1}$ by a first capability factor, and the panel maximum transmitting power $P_{CMAX,P}$ of the second uplink transmission via the second antenna panel in the overlapping symbol is a quotient obtained by dividing the second panel maximum transmitting power $P_{CMAX,P2}$ by a second capability factor,
wherein the first capability factor is determined based on a transmission capability of the first antenna panel, and the second capability factor is determined based on a transmission capability of the second antenna panel.

**15.** The uplink power control method according to claim 14, wherein the first transmission occasion further comprises a first non-overlapping symbol that does not overlap with the second transmission occasion within the transmission slot, and
in the case where the terminal maximum transmitting power $P_{CMAX}$ is less than or equal to the sum of the first panel maximum transmitting power $P_{CMAX,P1}$ and the second panel maximum transmitting power $P_{CMAX,P2}$, the panel maximum transmitting power $P_{CMAX,P}$ of the first uplink transmission via the first antenna panel in the first non-overlapping symbol is the first panel maximum transmitting power $P_{CMAX,P1}$.

**16.** The uplink power control method according to claim 14, wherein the second transmission occasion further comprises a second non-overlapping symbol that does not overlap with the first transmission occasion within the transmission slot, and
in the case where the terminal maximum transmitting power $P_{CMAX}$ is less than or equal to the sum of the first panel maximum transmitting power $P_{CMAX,P1}$ and the second panel maximum transmitting power $P_{CMAX,P2}$, the panel maximum transmitting power $P_{CMAX,P}$ of the second uplink transmission via the second antenna panel in the second non-overlapping symbol is the second panel maximum transmitting power $P_{CMAX,P2}$.

17. An uplink power control method, performed by an access network device, comprising:

> sending configuration information of a maximum transmitting power to a terminal device, the configuration information of the maximum transmitting power being configured to determine respective panel maximum transmitting powers $P_{CMAX,P}$ corresponding to uplink transmissions respectively performed by the terminal device via two antenna panels in a case of scheduling simultaneous transmission via multi-panel, STxMP, by multi-downlink control information, M-DCI,
> wherein the terminal device comprises a plurality of antenna panels and supports simultaneous uplink transmissions via the plurality of antenna panels.

18. The uplink power control method according to claim 17, wherein the two antenna panels comprise a first antenna panel and a second antenna panel,

> the configuration information of the maximum transmitting power is configured to determine a first panel maximum transmitting power $P_{CMAX,P1}$ of the uplink transmission via the first antenna panel in the case of scheduling the STxMP by the M-DCI, and
> the configuration information of the maximum transmitting power is configured to determine a second panel maximum transmitting power $P_{CMAX,P2}$ of the uplink transmission via the second antenna panel in the case of scheduling the STxMP by the M-DCI.

19. The uplink power control method according to claim 18, wherein the first antenna panel is configured to perform a first uplink transmission, the second antenna panel is configured to perform a second uplink transmission, and a first transmission occasion of the first uplink transmission and a second transmission occasion of the second uplink transmission are overlapped in a time domain within a transmission slot,

> the configuration information of the maximum transmitting power is configured to determine the first panel maximum transmitting power $P_{CMAX,P1}$ of the first antenna panel in each symbol of the first transmission occasion, and
> the configuration information of the maximum transmitting power is configured to determine the second panel maximum transmitting power $P_{CMAX,P2}$ of the second antenna panel in each symbol of the second transmission occasion.

20. The uplink power control method according to claim 19, wherein the access network device comprises a first transmission-reception point, TRP, and/or a second TRP, and
the uplink power control method further comprises:

> sending, via the first TRP, first DCI to the first antenna panel, the first DCI being configured to schedule the first antenna panel to perform the first uplink transmission in the first transmission occasion; and/or
> sending, via the second TRP, second DCI to the second antenna panel, the second DCI being configured to schedule the second antenna panel to perform the second uplink transmission in the second transmission occasion.

21. The uplink power control method according to any one of claims 17 to 20, wherein the configuration information of the maximum transmitting power comprises one of:

> configuration information of a terminal maximum transmitting power $P_{CMAX}$ of the terminal device;
> configuration information of respective panel maximum transmitting powers $P_{CMAX,P}$ corresponding to the antenna panels of the terminal device; or
> the configuration information of the terminal maximum transmitting power $P_{CMAX}$ of the terminal device, and the configuration information of the respective panel maximum transmitting powers $P_{CMAX,P}$ corresponding to the antenna panels of the terminal device.

22. The uplink power control method according to claim 21, wherein sending the configuration information of the maximum transmitting power to the terminal device comprises:

sending a radio resource control, RRC, message to the terminal device, the RRC message comprising the configuration information of the maximum transmitting power.

23. The uplink power control method according to claim 21 or 22, wherein the configuration information of the maximum transmitting power comprises the configuration information of the terminal maximum transmitting power $P_{CMAX}$ of the terminal device,

the respective panel maximum transmitting powers $P_{CMAX,P}$ corresponding to the uplink transmissions respectively performed via the two antenna panels are determined by one of:

obtaining the respective panel maximum transmitting powers $P_{CMAX,P}$ corresponding to the uplink transmissions respectively performed via the two antenna panels by dividing the terminal maximum transmitting power $P_{CMAX}$ equally; or

obtaining the respective panel maximum transmitting powers $P_{CMAX,P}$ corresponding to the uplink transmissions respectively performed via the two antenna panels by allocating the terminal maximum transmitting power $P_{CMAX}$ based on a power allocation factor; or

determining the respective panel maximum transmitting powers $P_{CMAX,P}$ corresponding to the uplink transmissions respectively performed via the two antenna panels based on indication information, the indication information being configured to indicate the respective panel maximum transmitting powers $P_{CMAX,P}$ of the two antenna panels,

wherein the power allocation factor is predefined, or is configured by the network device, or is reported by the terminal device.

24. The uplink power control method according to claim 23, wherein the two antenna panels comprise a first antenna panel and a second antenna panel, the first antenna panel is configured to perform a first uplink transmission in a first transmission occasion, the second antenna panel is configured to perform a second uplink transmission in a second transmission occasion, and the first transmission occasion and the second transmission occasion have an overlapping symbol within a transmission slot,

for the uplink transmission in the overlapping symbol, the respective panel maximum transmitting powers $P_{CMAX,P}$ corresponding to the uplink transmissions respectively performed via the two antenna panels are determined by one of:

obtaining the respective panel maximum transmitting powers $P_{CMAX,P}$ corresponding to the uplink transmissions respectively performed via the first antenna panel and the second antenna panel by dividing the terminal maximum transmitting power $P_{CMAX}$ equally; or

obtaining the respective panel maximum transmitting powers $P_{CMAX,P}$ corresponding to the uplink transmissions respectively performed via the first antenna panel and the second antenna panel by allocating the maximum transmitting power $P_{CMAX}$ based on the power allocation factor; or

determining the respective panel maximum transmitting powers $P_{CMAX,P}$ corresponding to the uplink transmissions respectively performed via the first antenna panel and the second antenna panel based on the indication information, the indication information being configured to indicate the respective panel maximum transmitting powers $P_{CMAX,P}$ of the two antenna panels,

wherein the power allocation factor is predefined, or is configured by the network device, or is reported by the terminal device.

25. The uplink power control method according to claim 24, wherein the first transmission occasion further comprises a first non-overlapping symbol that does not overlap with the second transmission occasion in the transmission slot,

for the first uplink transmission in the first non-overlapping symbol, a first panel maximum transmitting power $P_{CMAX,P1}$ corresponding to the first uplink transmission via the first antenna panel is determined by one of:

determining the terminal maximum transmitting power $P_{CMAX}$ as the first panel maximum transmitting power $P_{CMAX,P1}$ corresponding to the first uplink transmission via the first antenna panel; or

obtaining the first panel maximum transmitting power $P_{CMAX,P1}$ corresponding to the first uplink transmission via the first antenna panel by dividing the terminal maximum transmitting power $P_{CMAX}$ equally; or

obtaining the first panel maximum transmitting power $P_{CMAX,P1}$ corresponding to the first uplink transmission via the first antenna panel by allocating the terminal maximum transmitting power $P_{CMAX}$ based on the power allocation factor; or

determining the first panel maximum transmitting power $P_{CMAX,P1}$ corresponding to the first uplink transmission via the first antenna panel based on the indication information, the indication information being configured to indicate the respective panel maximum transmitting powers $P_{CMAX,P}$ of the two antenna panels,

wherein the power allocation factor is predefined, or is configured by the network device, or is reported by the terminal device.

26. The uplink power control method according to claim 24, wherein the second transmission occasion further comprises a second non-overlapping symbol that does not overlap with the first transmission occasion in the transmission slot, for the second uplink transmission in the second non-overlapping symbol, a second panel maximum transmitting power $P_{CMAX,P2}$ corresponding to the second uplink transmission via the second antenna panel is determined by one of:

determining the terminal maximum transmitting power $P_{CMAX}$ as the second panel maximum transmitting power $P_{CMAX,P2}$ corresponding to the second uplink transmission via the second antenna panel; or

obtaining the second panel maximum transmitting power $P_{CMAX,P2}$ corresponding to the second uplink transmission via the second antenna panel by dividing the terminal maximum transmitting power $P_{CMAX}$ equally; or

obtaining the second panel maximum transmitting power $P_{CMAX,P2}$ corresponding to the second uplink transmission via the second antenna panel by allocating the terminal maximum transmitting power $P_{CMAX}$ based on the power allocation factor; or

determining the second panel maximum transmitting power $P_{CMAX,P2}$ corresponding to the second uplink transmission via the second antenna panel based on the indication information, the indication information being configured to indicate the respective panel maximum transmitting powers $P_{CMAX,P}$ of the two antenna panels, wherein the power allocation factor is predefined, or is configured by the network device, or is reported by the terminal device.

27. The uplink power control method according to claim 21 or 22, wherein the two antenna panels comprise a first antenna panel and a second antenna panel,

the configuration information of the maximum transmitting power comprises configuration information of a first panel maximum transmitting power $P_{CMAX,P1}$ of the first antenna panel and a second panel maximum transmitting power $P_{CMAX,P2}$ of the second antenna panel,

the panel maximum transmitting power $P_{CMAX,P}$ of a first uplink transmission via the first antenna panel is the first panel maximum transmitting power $P_{CMAX,P1}$, and

the panel maximum transmitting power $P_{CMAX,P}$ of a second uplink transmission via the second antenna panel is the second panel maximum transmitting power $P_{CMAX,P2}$.

28. The uplink power control method according to claim 21 or 22, wherein the two antenna panels comprise a first antenna panel and a second antenna panel, and

the configuration information of the maximum transmitting power comprises: configuration information of a terminal maximum transmitting power $P_{CMAX}$ of the terminal device, and configuration information of a first panel maximum transmitting power $P_{CMAX,P1}$ of the first antenna panel and a second panel maximum transmitting power $P_{CMAX,P2}$ of the second antenna panel.

29. The uplink power control method according to claim 28, wherein

in a case where the terminal maximum transmitting power $P_{CMAX}$ is greater than a sum of the first panel maximum transmitting power $P_{CMAX,P1}$ and the second panel maximum transmitting power $P_{CMAX,P2}$, the panel maximum transmitting power $P_{CMAX,P}$ of a first uplink transmission via the first antenna panel is the first panel maximum transmitting power $P_{CMAX,P1}$, and the panel maximum transmitting power $P_{CMAX,P}$ of a second uplink transmission via the second antenna panel is the second panel maximum transmitting power $P_{CMAX,P2}$.

30. The uplink power control method according to claim 28, wherein the first antenna panel is configured to perform a first uplink transmission in a first transmission occasion, the second antenna panel is configured to perform a second uplink transmission in a second transmission occasion, the first transmission occasion and the second transmission occasion have an overlapping symbol within a transmission slot,

in a case where the terminal maximum transmitting power $P_{CMAX}$ is less than or equal to a sum of the first panel maximum transmitting power $P_{CMAX,P1}$ and the second panel maximum transmitting power $P_{CMAX,P2}$, the panel maximum transmitting power $P_{CMAX,P}$ of the first uplink transmission via the first antenna panel in the overlapping symbol is a half of the first panel maximum transmitting power $P_{CMAX,P1}$, and the panel maximum transmitting power $P_{CMAX,P}$ of the second uplink transmission via the second antenna panel in the overlapping symbol is a half of the second panel maximum transmitting power $P_{CMAX,P2}$, or

in the case where the terminal maximum transmitting power $P_{CMAX}$ is less than or equal to the sum of the first panel maximum transmitting power $P_{CMAX,P1}$ and the second panel maximum transmitting power $P_{CMAX,P2}$, the panel maximum transmitting power $P_{CMAX,P}$ of the first uplink transmission via the first antenna panel in the overlapping symbol is a quotient obtained by dividing the first panel maximum transmitting power $P_{CMAX,P1}$ by a first capability factor, and the panel maximum transmitting power $P_{CMAX,P}$ of the second uplink transmission via the second antenna panel in the overlapping symbol is a quotient obtained by dividing the second panel maximum transmitting power $P_{CMAX,P2}$ by a second capability factor,

wherein the first capability factor is determined based on a transmission capability of the first antenna panel, and the second capability factor is determined based on a transmission capability of the second antenna panel.

31. The uplink power control method according to claim 30, wherein the first transmission occasion further comprises a first non-overlapping symbol that does not overlap with the second transmission occasion within the transmission slot, and

in the case where the terminal maximum transmitting power $P_{CMAX}$ is less than or equal to the sum of the first panel maximum transmitting power $P_{CMAX,P1}$ and the second panel maximum transmitting power $P_{CMAX,P2}$, the panel maximum transmitting power $P_{CMAX,P}$ of the first uplink transmission via the first antenna panel in the first non-overlapping symbol is the first panel maximum transmitting power $P_{CMAX,P1}$.

32. The uplink power control method according to claim 30, wherein the second transmission occasion further comprises a second non-overlapping symbol that does not overlap with the first transmission occasion within the transmission slot, and

in the case where the terminal maximum transmitting power $P_{CMAX}$ is less than or equal to the sum of the first panel maximum transmitting power $P_{CMAX,P1}$ and the second panel maximum transmitting power $P_{CMAX,P2}$, the panel maximum transmitting power $P_{CMAX,P}$ of the second uplink transmission via the second antenna panel in the second non-overlapping symbol is the second panel maximum transmitting power $P_{CMAX,P2}$.

33. An uplink power control device, comprising:

a receiving module, configured to receive configuration information of a maximum transmitting power sent by an access network device, the configuration information of the maximum transmitting power being configured to determine respective panel maximum transmitting powers $P_{CMAX,P}$ corresponding to uplink transmissions respectively performed by the terminal device via two antenna panels in a case of scheduling simultaneous transmission via multi-panel, STxMP, by multi-downlink control information, M-DCI,

wherein the terminal device comprises a plurality of antenna panels and supports simultaneous uplink transmissions via the plurality of antenna panels.

34. An uplink power control device, comprising:

a sending module, configured to send configuration information of a maximum transmitting power to a terminal device, the configuration information of the maximum transmitting power being configured to determine respective panel maximum transmitting powers $P_{CMAX,P}$ corresponding to uplink transmissions respectively performed by the terminal device via two antenna panels in a case of scheduling simultaneous transmission via multi-panel, STxMP, by multi-downlink control information, M-DCI,

wherein the terminal device comprises a plurality of antenna panels and supports simultaneous uplink transmissions via the plurality of antenna panels.

35. A terminal device, comprising a processor and a transceiver connected to the processor,

wherein the transceiver is configured to receive configuration information of a maximum transmitting power sent by an access network device, the configuration information of the maximum transmitting power being configured to determine respective panel maximum transmitting powers $P_{CMAX,P}$ corresponding to uplink transmissions respectively performed by the terminal device via two antenna panels in a case of scheduling simultaneous transmission via multi-panel, STxMP, by multi-downlink control information, M-DCI,

wherein the terminal device comprises a plurality of antenna panels and supports simultaneous uplink transmissions via the plurality of antenna panels.

36. A network device, comprising a processor and a transceiver connected to the processor,

wherein the transceiver is configured to send configuration information of a maximum transmitting power to a terminal device, the configuration information of the maximum transmitting power being configured to determine respective panel maximum transmitting powers $P_{CMAX,P}$ corresponding to uplink transmissions respectively performed by the terminal device via two antenna panels in a case of scheduling simultaneous transmission via multi-panel, STxMP by multi-downlink control information, M-DCI,

wherein the terminal device comprises a plurality of antenna panels and supports simultaneous uplink transmissions via the plurality of antenna panels.

37. A computer-readable storage medium having executable instructions stored thereon, wherein the executable instructions are loaded and executed by a processor to implement the uplink power control method according to any one of claims 1 to 32.

38. A chip comprising a programmable logic circuit or program, wherein the chip is configured to implement the uplink power control method according to any one of claims 1 to 32.

FIG. 1

FIG. 2

TRP1                          TRP2

PUSCH1 ↑ ↓ PDCCH1    PUSCH2 ↑ ↓ PDCCH2

| First antenna panel | 10 | Second antenna panel |

FIG. 3

| Receiving configuration information of a maximum transmitting power sent by an access network device, the configuration information of the maximum transmitting power being configured to determine respective panel maximum transmitting powers $P_{CMAX,P}$ corresponding to uplink transmissions respectively performed by the terminal device via two antenna panels in a case of scheduling STxMP by multi-DCI | 210 |

FIG. 4

| Sending configuration information of a maximum transmitting power to a terminal device, the configuration information of the maximum transmitting power being configured to determine respective panel maximum transmitting powers $P_{CMAX,P}$ corresponding to uplink transmissions respectively performed by the terminal device via two antenna panels in a case of scheduling STxMP by multi-DCI | 220 |

FIG. 5

Terminal device

Access network device

301, RRC message (configuration information of maximum transmitting power)

302, Sending first DCI via first TRP

303, Sending second DCI via second TRP

304, Determining respective maximum transmitting powers of two antenna panels

305, Performing, via first antenna panel, first uplink transmission to first TRP based on $P_{CMAX,p1}$

306, Performing, via second antenna panel, second uplink transmission to second TRP based on $P_{CMAX,p2}$

FIG. 6

Frequency domain

First transmission occasion

Second transmission occasion

Time domain

0    1    2    3    4    5    6

FIG. 7

Receiving
module 401

FIG. 8

Sending module 402

FIG. 9

Processor 101　　Transmitter 103

Bus 105

Receiver 102　　Memory 104

FIG. 10

## INTERNATIONAL SEARCH REPORT

| International application No. |
| --- |
| **PCT/CN2022/108119** |

| A. | CLASSIFICATION OF SUBJECT MATTER |
| --- | --- |
| | H04W72/04(2023.01)i |

According to International Patent Classification (IPC) or to both national classification and IPC

| B. | FIELDS SEARCHED |
| --- | --- |

Minimum documentation searched (classification system followed by classification symbols)

IPC: H04W; H04L

Documentation searched other than minimum documentation to the extent that such documents are included in the fields searched

Electronic data base consulted during the international search (name of data base and, where practicable, search terms used)

CNABS; CNTXT; CNKI; VEN; ENTXT; DWPI; 3GPP: DCI, 第一TRP, 第一面板, 第二TRP, 第二面板, 多TRP, 多天线面板, 发射, 发射功率, 功率, 最大, 功率分配, 上行, 天线面板, 重叠, 最大发射功率, first TRP, second TRP, muti-panel, transmit power, power, transmission, max, power allocation, UL, uplink, panel, overlap

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113302987 A (LENOVO (SINGAPORE) PTE. LTD.) 24 August 2021 (2021-08-24) description, paragraphs [0034]-[0158] | 1-38 |
| A | CN 111183593 A (LENOVO (SINGAPORE) PTE. LTD.) 19 May 2020 (2020-05-19) entire document | 1-38 |
| A | CN 110612751 A (IDAC HOLDINGS, INC.) 24 December 2019 (2019-12-24) entire document | 1-38 |
| A | US 2013039286 A1 (TELEFONAKTIEBOLAGET LM ERICSSON (PUBL) et al.) 14 February 2013 (2013-02-14) entire document | 1-38 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 April 2023** | **26 April 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/108119**

| Patent document cited in search report | | | Publication date (day/month/year) | Patent family member(s) | | | Publication date (day/month/year) |
|---|---|---|---|---|---|---|---|
| CN | 113302987 | A | 24 August 2021 | US | 2021168726 | A1 | 03 June 2021 |
| | | | | US | 11350370 | B2 | 31 May 2022 |
| | | | | US | 2022295415 | A1 | 15 September 2022 |
| | | | | EP | 3909312 | A1 | 17 November 2021 |
| | | | | WO | 2020144540 | A1 | 16 July 2020 |
| | | | | US | 2020229104 | A1 | 16 July 2020 |
| | | | | US | 10945216 | B2 | 09 March 2021 |
| CN | 111183593 | A | 19 May 2020 | US | 2019141643 | A1 | 09 May 2019 |
| | | | | US | 11134452 | B2 | 28 September 2021 |
| | | | | WO | 2019069132 | A1 | 11 April 2019 |
| | | | | US | 2022015045 | A1 | 13 January 2022 |
| | | | | US | 2019104477 | A1 | 04 April 2019 |
| | | | | US | 10660048 | B2 | 19 May 2020 |
| | | | | US | 2021211998 | A1 | 08 July 2021 |
| | | | | US | 11419067 | B2 | 16 August 2022 |
| | | | | US | 2020280934 | A1 | 03 September 2020 |
| | | | | US | 10986593 | B2 | 20 April 2021 |
| | | | | WO | 2019069127 | A2 | 11 April 2019 |
| | | | | WO | 2019069127 | A3 | 06 September 2019 |
| | | | | US | 2022377676 | A1 | 24 November 2022 |
| | | | | EP | 3669466 | A1 | 24 June 2020 |
| CN | 110612751 | A | 24 December 2019 | WO | 2018175784 | A1 | 27 September 2018 |
| | | | | KR | 20230008919 | A | 16 January 2023 |
| | | | | EP | 3603226 | A1 | 05 February 2020 |
| | | | | US | 2020059867 | A1 | 20 February 2020 |
| | | | | US | 11595905 | B2 | 28 February 2023 |
| | | | | KR | 20190139849 | A | 18 December 2019 |
| | | | | KR | 102486281 | B1 | 06 January 2023 |
| US | 2013039286 | A1 | 14 February 2013 | MX | 2014000918 | A | 12 May 2014 |
| | | | | WO | 2013022396 | A1 | 14 February 2013 |
| | | | | US | 8934403 | B2 | 13 January 2015 |
| | | | | MY | 166584 | A | 17 July 2018 |
| | | | | TW | 201309065 | A | 16 February 2013 |
| | | | | TWI | 594649 | B | 01 August 2017 |
| | | | | US | 2015223174 | A1 | 06 August 2015 |
| | | | | US | 9288766 | B2 | 15 March 2016 |
| | | | | BR | 112014001562 | A2 | 21 February 2017 |
| | | | | BR | 112014001562 | B1 | 03 May 2022 |
| | | | | ES | 2552251 | T3 | 26 November 2015 |
| | | | | EP | 2742746 | A1 | 18 June 2014 |
| | | | | EP | 2742746 | B1 | 22 July 2015 |
| | | | | US | 2016157188 | A1 | 02 June 2016 |
| | | | | US | 9668226 | B2 | 30 May 2017 |
| | | | | PL | 2742746 | T3 | 31 December 2015 |

Form PCT/ISA/210 (patent family annex) (July 2022)